# EUROPÄISCHE PATENTANMELDUNG

(11) **EP 2 103 622 A1**
(43) Veröffentlichungstag der Anmeldung: **23.09.2009**
(21) Anmeldenummer: 08005246.7
(22) Anmeldetag: 20.03.2008
(51) Int. Cl.: C07F 7/18

(54) **Silane und polysiloxane**

(71) Anmelder: Huntsman Textile Effects (Germany) GmbH, 86462 Langweid a. Lech (DE)
(72) Erfinder: Chrobaczek, Harald, Dr., 86153 Augsburg (DE); Süss, Sabrina, 86647 Lauterbach (DE); Tschida, Günther, 86830 Schwabmünchen (DE); Lindmair, Gabriele, 86405 Meitingen (DE)

(57) **Zusammenfassung**

Silane der Formel 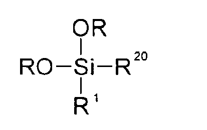 und neue Polysiloxane werden beschrieben, wobei die Polysiloxane durch Umsetzung von Polyorganosiloxanen mit Silanen der oben angegebenen Formel oder mit Silanen der Formel 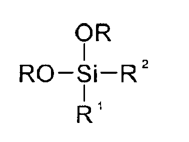 hergestellt werden können.

Die so erhaltenen neuen Polysiloxane eignen sich unter anderem für die Behandlung von textilen Flächengebilden aus natürlichen oder synthetischen Fasern.

## Beschreibung

Die Erfindung betrifft neue Silane. Sie betrifft ferner neue Polyorganosiloxane und deren Verwendung.

Es ist bekannt, Polyorganosiloxane zur Behandlung von textilen Flächengebilden zu verwenden. Den Textilien lassen sich hierdurch erwünschte Eigenschaften wie z.B. weicher Griff und wasserabweisende Eigenschaften verleihen.
Es ist ferner bekannt, monomere Silane zur Herstellung von Polyorganosiloxanen zu verwenden.
Ebenfalls bekannt sind Polysiloxane, welche Acrylatogruppen enthalten, z.B. aus der DE-A 102 19 734, EP-A 564 253, US-A 4 528 081 und der EP-A 373 659 und der US 6 211 322 B1. Aus der oben genannten Literatur geht außerdem hervor, dass es bekannt ist, Silicumverbindungen, welche Acrylateinheiten enthalten, durch radikalische Polymerisation zu härten. Diese radikalische Polymerisation kann z.B. durch UV-Bestrahlung erfolgen.
Gemäß dem Stand der Technik lassen sich Polyorganosiloxane mit funktionellen Gruppen, z.B. Acrylatgruppen, in Seitenketten herstellen durch Kondensations- oder Äquilibrierungsreaktionen. Hierbei werden Polyorganosiloxane mit monomeren, reaktive Gruppen tragenden, Silanen umgesetzt, wobei im Fall von Kondensationsreaktionen als Ausgangsverbindungen Polysiloxane mit endständigen OH-Gruppen verwendet werden.
Die aus dem Stand der Technik bekannten Silane und die mit ihnen hergestellten Polyorganosiloxane weisen neben Vorteilen auch Nachteile auf, z.B. was Eigenschaften der mit ihnen ausgerüsteten Textilien und Permanenz dieser Eigenschaften betrifft. Ferner lassen sich bekannte Silane und bekannte Polysiloxane in einer Reihe von Fällen, abhängig von den gewünschten Substituenten, nur mittels aufwendiger Verfahren herstellen.

Der vorliegenden Erfindung lag die Aufgabe zugrunde, Silane zur Verfügung zu stellen, welche sich ausgezeichnet zum Einbau in eine gegebene Polyorganosiloxankette eignen und ferner darin, Polyorganosiloxane zur Verfügung zu stellen, welche hervorragende Eignung für die Behandlung von textilen Flächengebilden aus Fasermaterialien besitzen und den Fasermaterialien hierdurch vorteilhafte Eigenschaften bei hoher Permanenz gegenüber Waschvorgängen verleihen.

Die Aufgabe wurde gelöst einerseits durch monomere Silane der allgemeinen Strukturformel (XXXV) 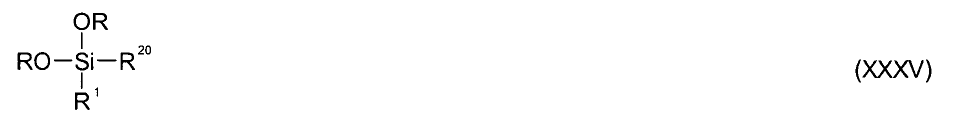 worin alle Reste R unabhängig voneinander für den Phenylrest oder für einen verzweigten oder unverzweigten Alkylrest mit 1 bis 18 Kohlenstoffatomen, vorzugsweise für -CH₃ oder -CH₂-CH₃ stehen, worin R¹ für R oder für OR oder für 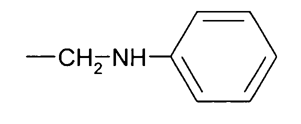 steht,
worin R²⁰ für einen Rest einer der Formeln (XXXVI) bis (XLI) oder einer der Formeln (XLI a) bis (XLI h) steht 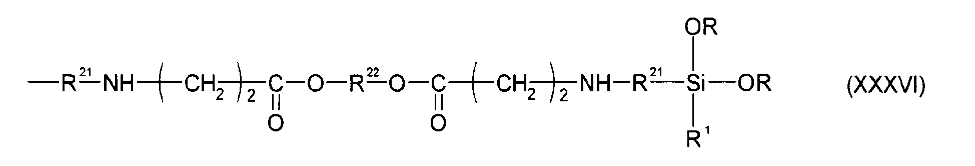 worin R²¹ für einen linearen oder verzweigten Alkylenrest mit 3 bis 8 Kohlenstoffatomen steht, der durch eine oder mehrere -NH-Brücken unterbrochen sein kann und worin R²² für einen linearen oder verzweigten Alkylenrest mit 6 bis 18 Kohlenstoffatomen steht, oder wobei R²² ein zweiwertiger Rest der Formel 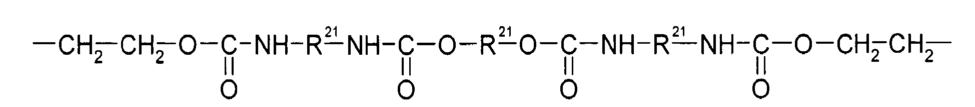 ist, worin jeder der Reste R²¹ entweder die oben genannte Bedeutung besitzt oder für einen Rest der Formel 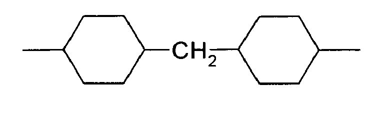 steht,
oder worin R²² für einen Rest der Formel 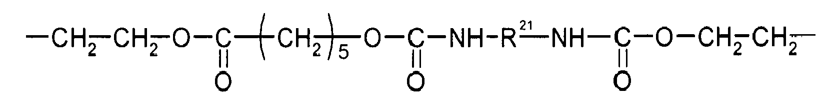 steht 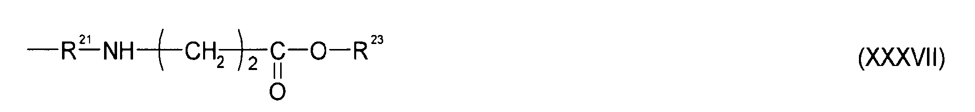 worin R²³ für einen linearen oder verzweigten Alkylrest mit 8 bis 16 Kohlenstoffatomen steht, 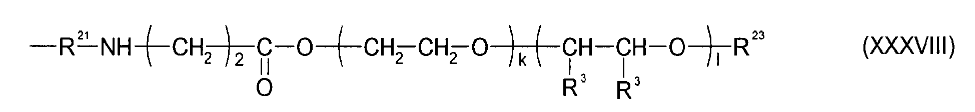 wobei in Formel (XXXVIII) R²³ entweder die oben genannte Bedeutung besitzt oder für H steht, worin einer der Reste R³ für H und der andere für CH₃ steht, k und I jeweils für eine Zahl von 1 bis 22 stehen und wobei die Summe k + I im Bereich von 3 bis 25 liegt und wobei die einzelnen Einheiten 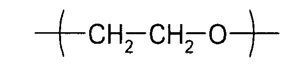 und 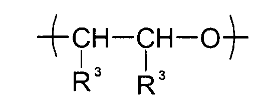 beliebig über die Kette verteilt sein können, 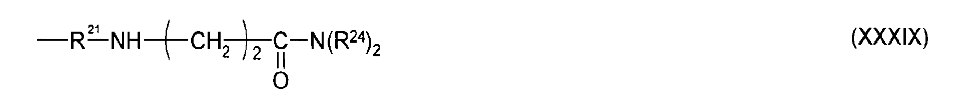 worin jeder der beiden Reste R²⁴ unabhängig voneinander für einen linearen oder verzweigten Alkylrest mit 1 bis 6 Kohlenstoffatomen steht, 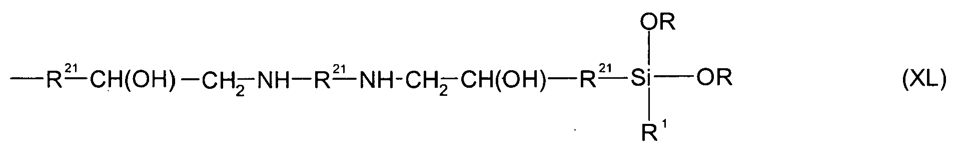 wobei in Formel (XL) R²¹ entweder die oben genannte Bedeutung besitzt oder für einen zweiwertigen Rest der Formel 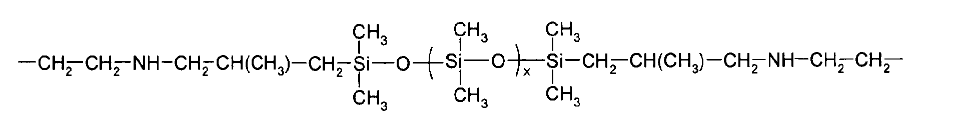 steht, worin x eine Zahl von 0 bis 1500 ist, 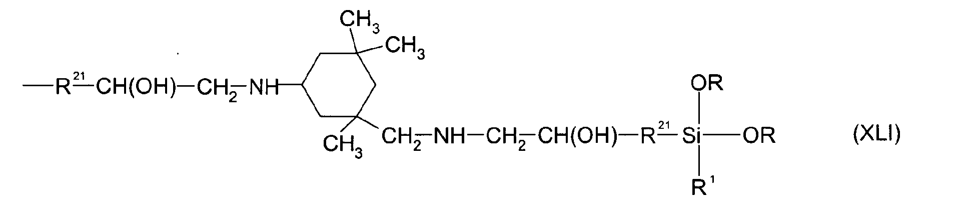 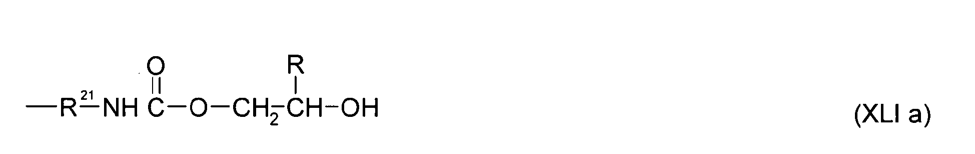 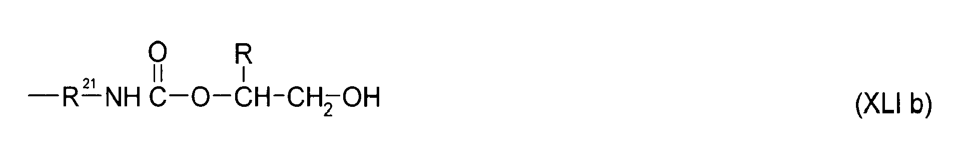 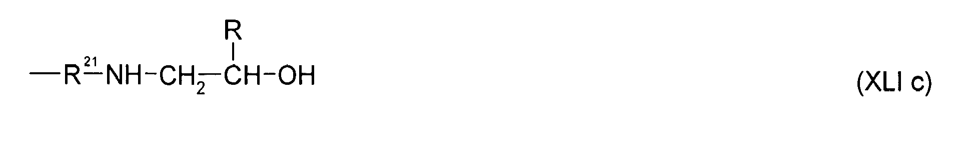 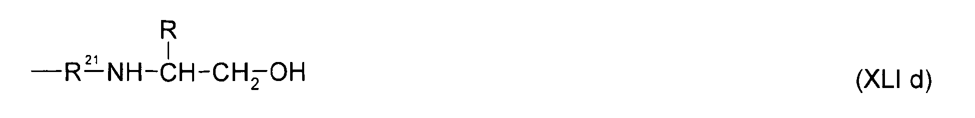 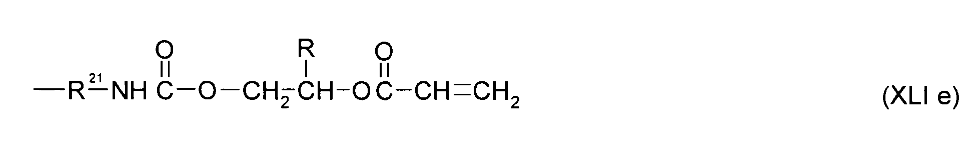 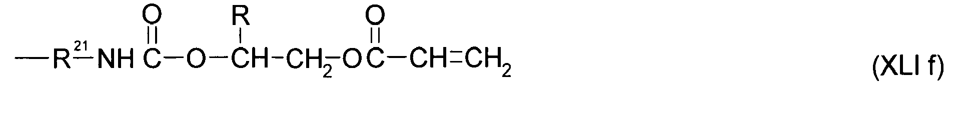 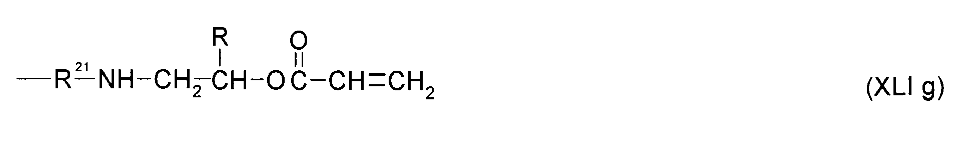 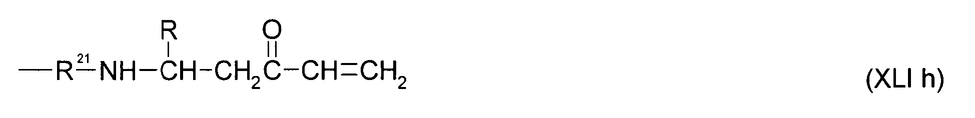 wobei das Silan der Formel (XXXV) auch ein Produkt sein kann, das durch Umsetzung eines Silans der Formel 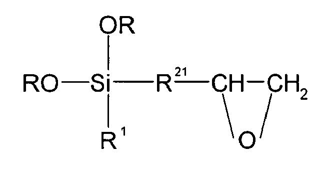 mit einem Polyetheramin oder einem Produkt T entsteht, wobei das Polyetheramin vorzugsweise ein Produkt der Formel 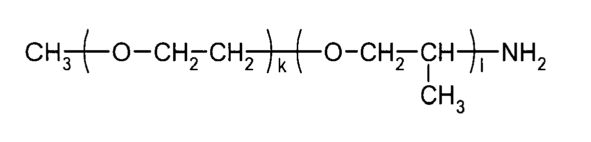 oder der Formel 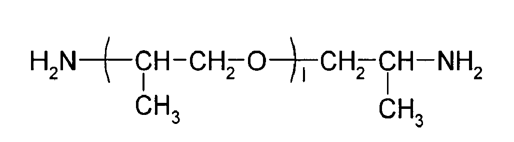 oder der Formel 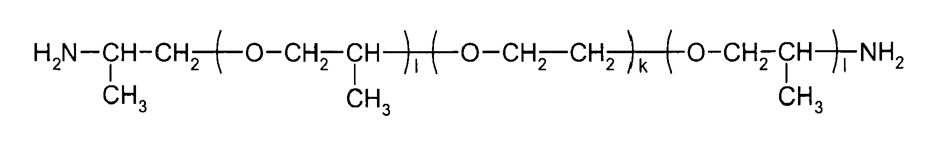 oder der Formel 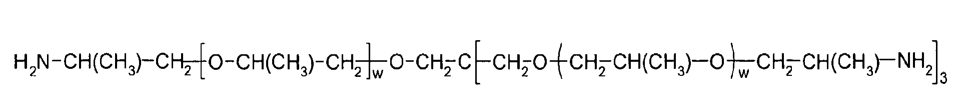 ist,
wobei w eine Zahl von 2 bis 8 ist,
wobei k und I jeweils einen Wert von 1 bis 22 besitzen
und das Produkt T ein Produkt einer der Formeln F₁ bis F₃ ist 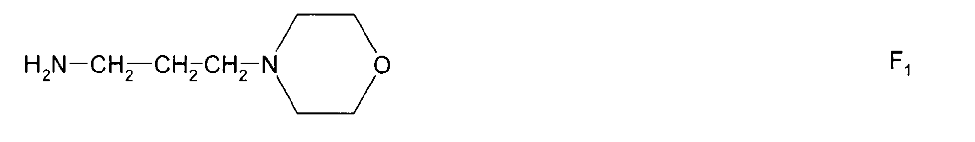 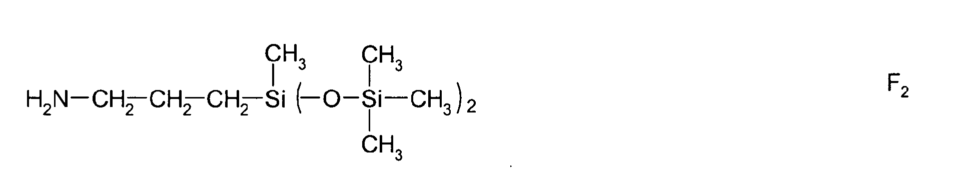 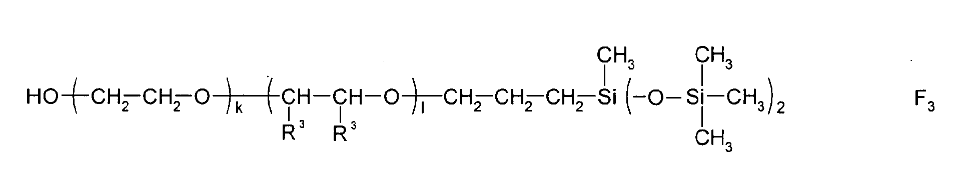 oder wobei das Produkt T ein 3-(2-aminoethyl)-aminopropyl-methyl-silsesquioxan mit endständiger-OCH₃-Gruppe ist.

Ferner besteht eine Lösung der Aufgabe in der Bereitstellung von Polyorganosiloxanen, die herstellbar sind durch Umsetzung eines Polyorganosiloxans der Formel (VIII) oder eines Gemischs von Polyorganosiloxanen der Formel (VIII) 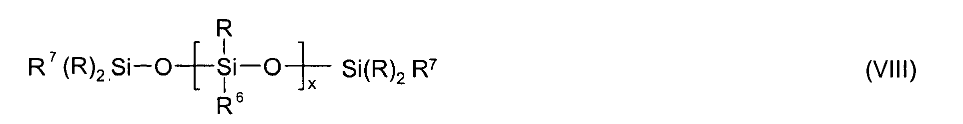 wobei R⁶ für R oder für einen Rest der Formel (IX) steht 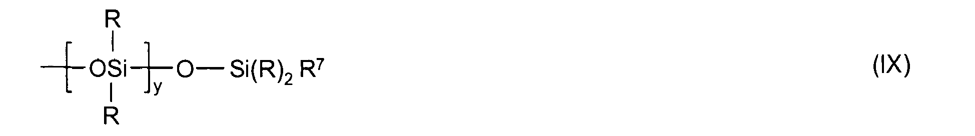 wobei x eine Zahl von 0 bis 1500 ist, vorzugsweise von 10 bis 1500,
y eine Zahl von 0 bis 500 ist,
worin alle anwesenden Reste R⁷ für R oder für OH oder für OR stehen und alle Reste R die in Anspruch 1 genannte Bedeutung besitzen,
mit einem Silan der Formel (I) oder der Formel (XXXV) oder mit einem Gemisch solcher Silane 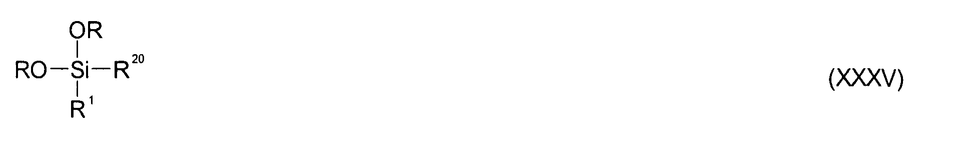 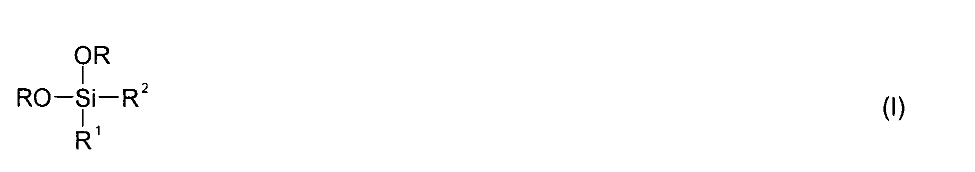 worin R, R²⁰ und R¹ die in Anspruch 1 genannten Bedeutungen besitzen und wobei R² für den Vinylrest oder für einen linearen oder verzweigten Alkylrest mit 1 bis 18 Kohlenstoffatomen steht, der durch eine oder mehrere, gegebenenfalls quaternierte, Aminogruppen, Amidogruppen, Mercaptogruppen, Epoxygruppen, Phosphonogruppen, Hydroxygruppen oder Fluoratome substituiert sein kann,
oder wobei
R² für einen Rest der Formel (II), der Formel (III) oder der Formel (IV) steht, 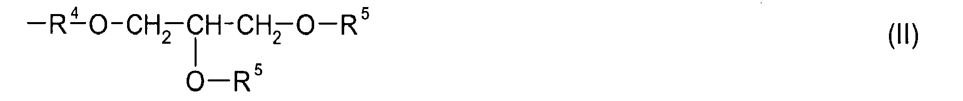 worin beide Reste R⁵ für 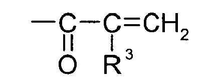 stehen, oder einer der Reste R⁵ für H und der andere für 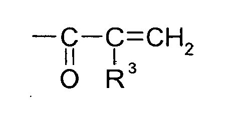 steht, 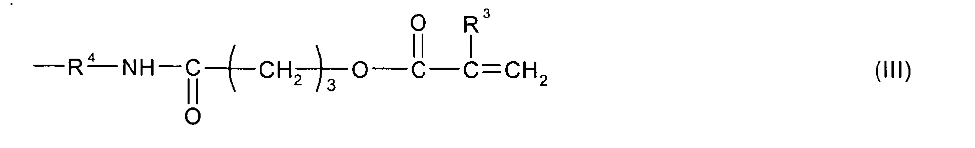 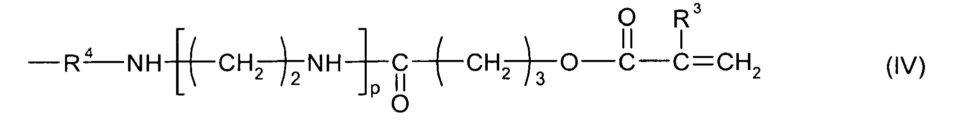 wobei p 0, 1 oder 2 ist,
wobei R³ jeweils für H oder CH₃ steht, oder wobei R² für einen Rest der Formel (V) steht 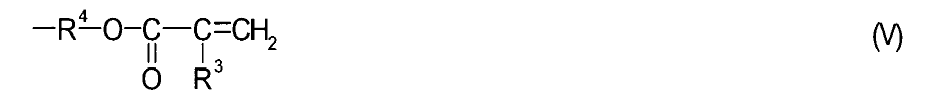 wobei in den Formeln (III), (IV) und (V) R⁴ jeweils für einen zweiwertigen linearen oder verzweigten Kohlenwasserstoffrest mit 1 bis 4 Kohlenstoffatomen steht,
oder wobei R² für einen Rest der Formel (VI) oder der Formel (VII) oder der Formel (X) steht 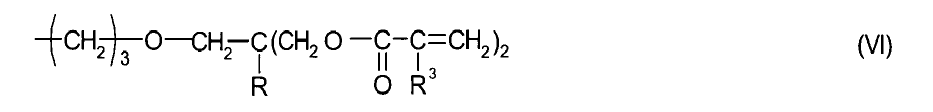 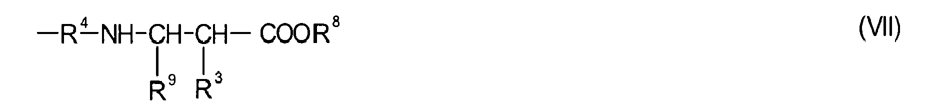 worin R⁸ für H oder für CH₃ oder für C₂H₅ oder für-CH₂CH₂-OH steht und R⁹ für H oder für -COOR⁸ steht 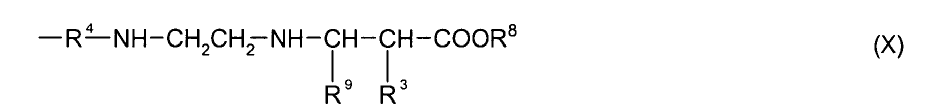 oder worin R² für einen Rest einer der Formeln (XI), (Xla) oder (XII) bis (XX) oder der Formel (XVIIIa) oder Formel (XXa) oder Formel (XXb) oder Formel (XXc) steht, 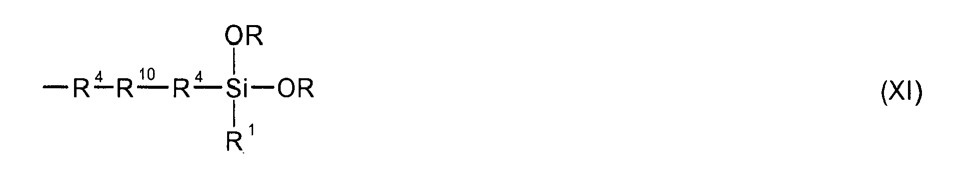 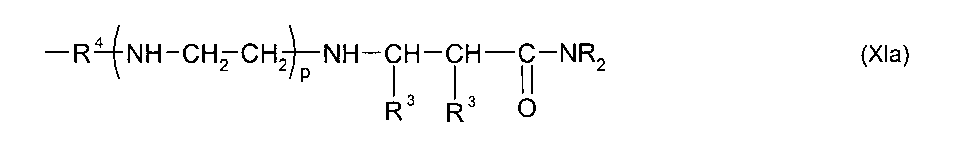 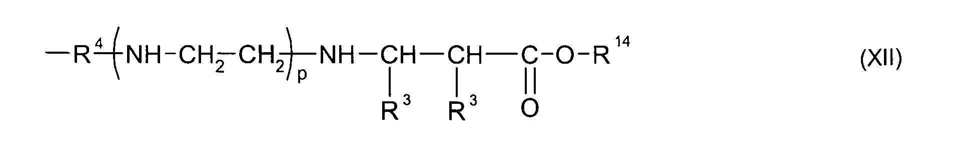 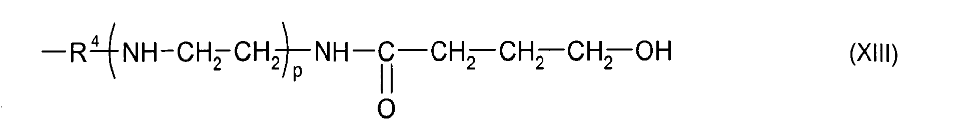 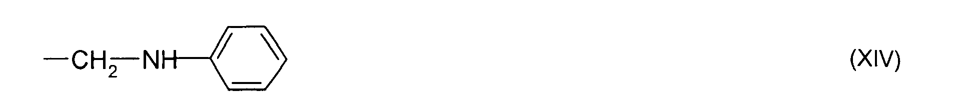 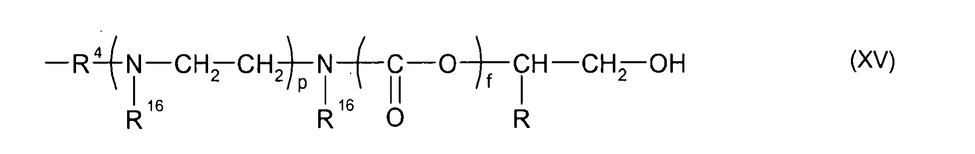 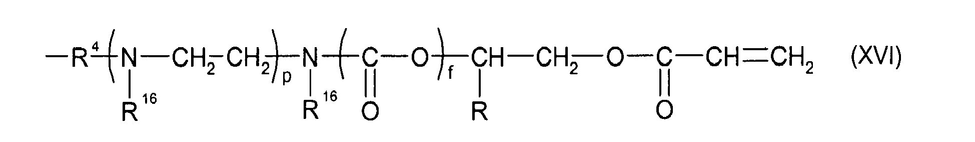 wobei p für 0, 1 oder 2 steht,
in allen Formeln R⁴ für einen zweiwertigen linearen oder verzweigten Kohlenwasserstoffrest mit 1 bis 4 Kohlenstoffatomen steht,
R³ jeweils für H oder CH₃ steht,
R¹⁴ für H oder einen linearen oder verzweigten Alkylrest mit 1 bis 18 Kohlenstoffatomen oder für einen Rest der Formel (XIX) steht,
worin die einzelnen Einheiten -(CH₂-CH₂-O)- und -(CHR³-CHR³-O)- beliebig über die Kette verteilt sein können, worin k und I jeweils eine Zahl im Bereich von 1 bis 22 sind und die Summe k+I im Bereich von 3 bis 25 liegt,
worin f für 0 oder 1 steht,
alle Reste R¹⁶ unabhängig voneinander für H oder für 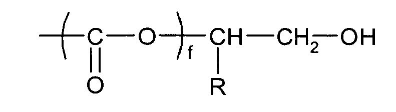 oder für 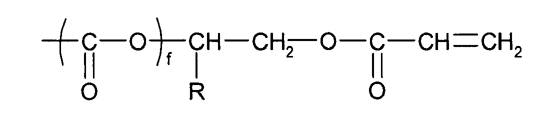 stehen, 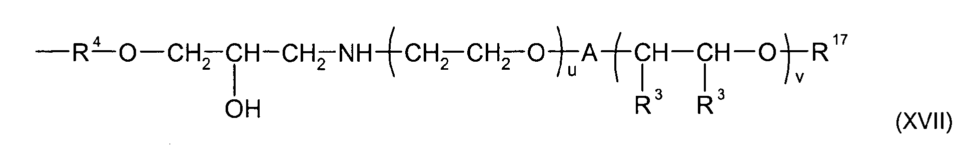 worin A für eine direkte Bindung oder für einen zweiwertigen Rest der Formel 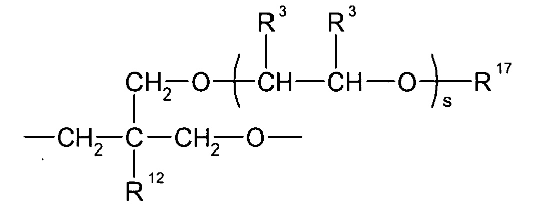 steht, wobei im Fall von Formel (XVII) die Werte von u, v und s so gewählt sind, dass das Äquivalentgewicht dieses Restes R² im Bereich von 100 bis 5000 liegt, wobei eins oder zwei von u, v und s auch den Wert 0 annehmen können und wobei die einzelnen Einheiten
-CH₂-CH₂-O- und 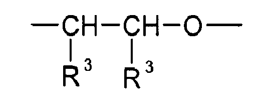 beliebig über die Kette verteilt sein können,
wobei R¹² für H oder C₂H₅ steht und
wobei R¹⁷ für R oder für -R⁴-NH₂ oder für 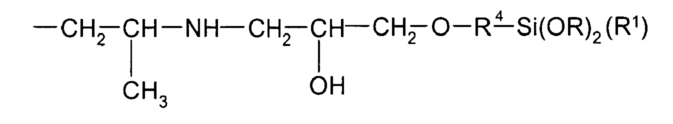 steht, 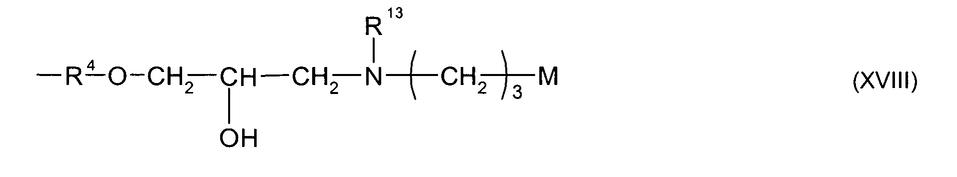 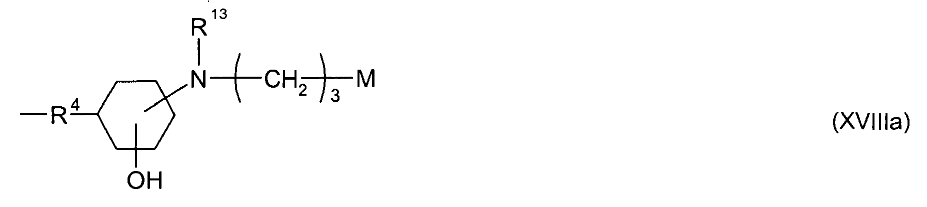 wobei M ausgewählt ist aus 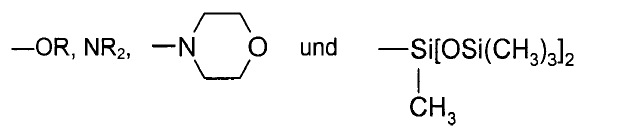 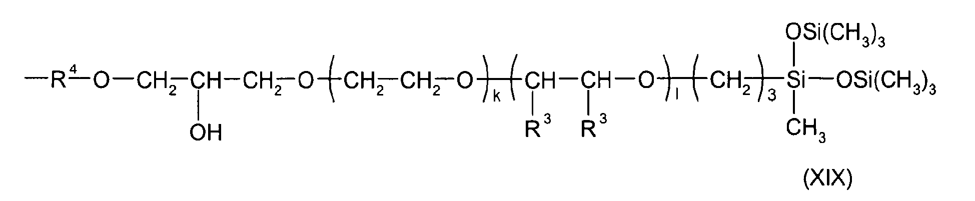 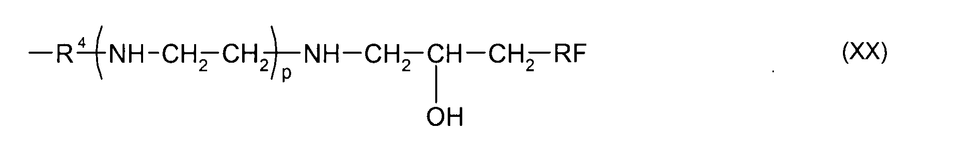 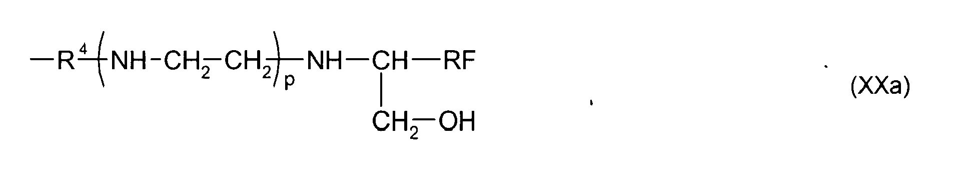 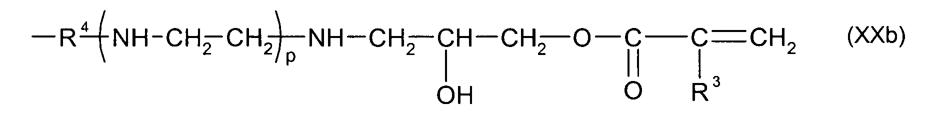 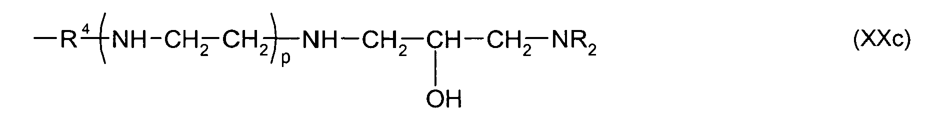 worin RF für einen Perfluoralkylrest mit 5 bis 23 Kohlenstoffatomen steht,
worin R¹⁰ für einen zweiwertigen Rest einer der Formeln (XXI) bis (XXIVa) steht, 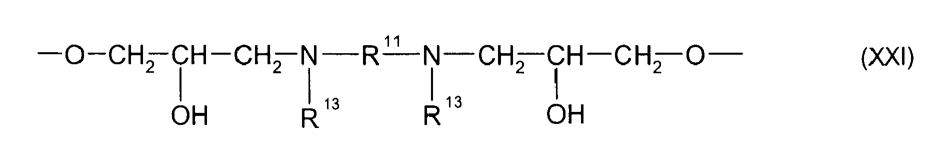 worin R¹³ für H oder -CH(CH₃)₂ oder für -CH₂-CH(CH₃)₂ steht, 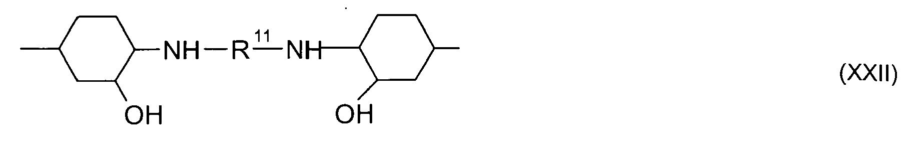 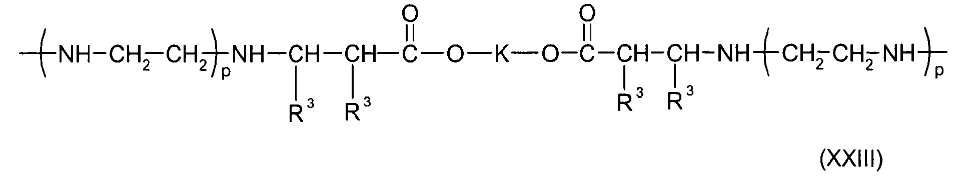 worin K für einen linearen oder verzweigten Alkylenrest mit 2 bis 18 Kohlenstoffatomen steht, 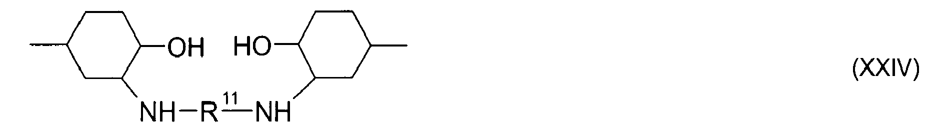 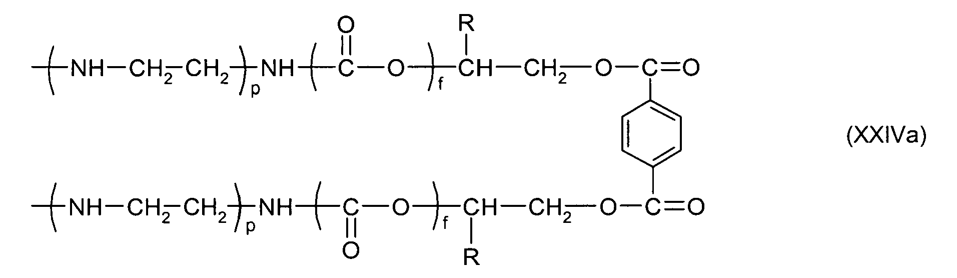 worin f für 0 oder 1 steht
wobei jeder der Reste R¹¹ für 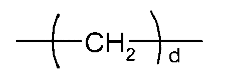 worin d eine Zahl von 1 bis 6 ist,
oder für einen Rest einer der Formeln (XXV) bis (XXXI) steht, 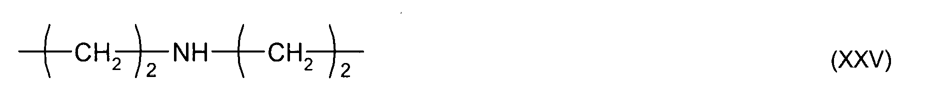 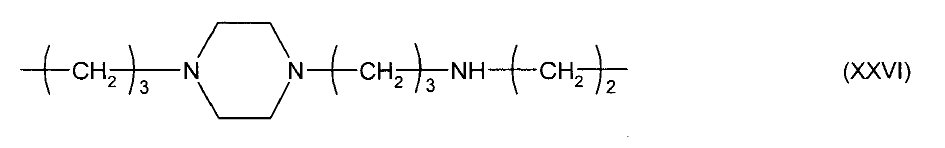 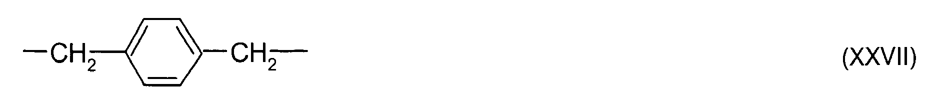 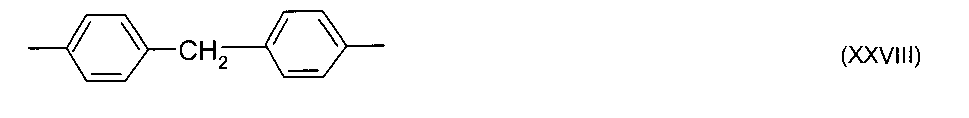 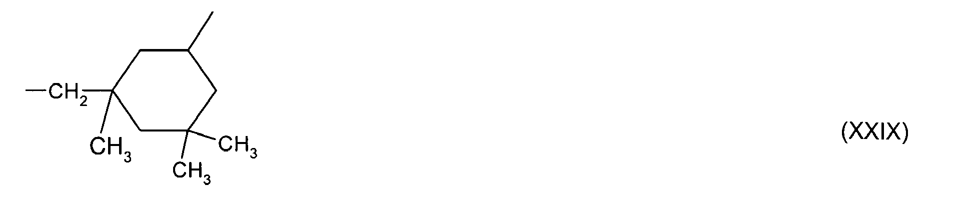 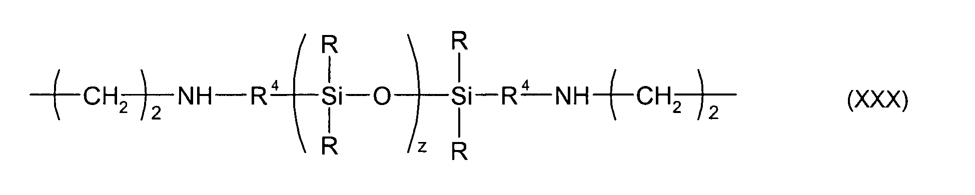 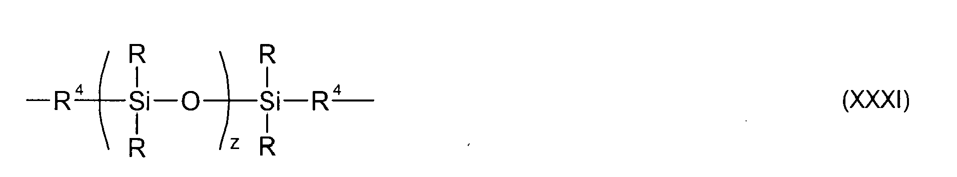 worin z eine Zahl von 8 bis 500, vorzugsweise von 8 bis 20, ist,
wobei alle oder ein Teil der Stickstoffatome, welche in den oben genannten Formeln vorhanden sind und die nicht Teil einer Amidgruppe sind, in quaternisierter Form vorliegen können.

Die erfindungsgemäßen Silane der Formel (XXXV) ermöglichen die Herstellung neuer Polyorganosiloxane mit speziellen, bis dahin nicht bekannten, Strukturen. Durch die entsprechende Auswahl der Silane lassen sich auf diese Weise Polyorganosiloxane mit speziellen Struktureinheiten erhalten, darunter Polyorganosiloxane mit intramolekular verbundenen Polymereinheiten, die als intermolekulare Polymere nicht miteinander mischbar sind. Andererseits besitzen auch die Polyorganosiloxane, welche sich erhalten lassen durch Umsetzung von Polyorganosiloxanen der Formel (VIII) mit Silanen der Formel (I) vorteilhafte Eigenschaften bei ihrer Verwendung für die Behandlung von textilen Flächengebilden aus Fasermaterialien.
Die erfindungsgemäßen Polyorganosiloxane sind gut geeignet für die Behandlung von Fasermaterialien, unabhängig davon, ob bei ihrer Herstellung Silane der Formel (I) oder der Formel (XXXV) oder ein Gemisch solcher Silane verwendet wurde. Sie sind auch geeignet für Beschichtungsprozesse, z.B. Beschichtung von textilen Flächengebilden. Auch Glasfasergewebe können mit diesen neuen Polysiloxanen behandelt werden. Das Aufbringen der erfindungsgemäßen dimeren/oligomeren Silane oder der erfindungsgemäßen neuen Polysiloxane auf die textilen Flächengebilde oder auf die Glasfasergewebe kann nach bekannten Methoden erfolgen, z.B. durch Beschichtung oder Foulardierung (Badimprägnierung).
Die erfindungsgemäßen neuartigen Polyorganosiloxane, welche durch Umsetzung der erfindungsgemäßen Silane der Formel (XXXV) oder der Silane der Formel (I) mit Polyorganosiloxanen der Formel (VIII) hergestellt werden können, lassen sich unter anderem gut für die Behandlung textiler Flächengebilde aus Fasermaterialien verwenden. Als Fasermaterialien kommen hierbei Gewebe, Gewirke oder nonwovens (Vliese) aus natürlichen oder synthetischen Fasern in Frage, wie z.B. aus Baumwolle, Polyester, Polypropylen oder Polyamid oder Gemischen solcher Fasern, wobei im Fall von Polypropylen eine Plasmavorbehandlung vorgeschaltet sein kann. Die Applikation kann z.B. mittels Foulard-Verfahren oder Besprühen erfolgen. Gegebenenfalls erfolgt die Applikation in Form einer Beschichtung. Die erfindungsgemäßen neuartigen Polyorganosiloxane eignen sich auch gut für die dem Fachmann bekannten Methoden der Vorhangbeschichtung (curtain-coating). Für den Fall, dass der in den Silanen der Formel (I) oder der Formel (XXXV) enthaltene Rest R² bzw. R²⁰ (Meth-)Acrylateinheiten aufweist, kann sich an die Vorhangbeschichtung ein Härtungs-(curing-)Vorgang anschließen, bei dem die Acrylateinheiten polymerisiert werden. Dies kann in bekannter Weise mittels Elektronenstrahlen oder durch UV-Strahlung bewirkt werden. Hierfür können bekannte Photoinitiatoren wie Produkte der Serie IRGACURE® (Ciba Spezialitätenchemie, Basel, CH) verwendet werden oder Produkte, wie sie in der US-B1 6 211 308 (Spalte 10) genannt sind.

Die neuartigen erfindungsgemäßen Polysiloxane lassen sich auch zur Ausrüstung von Precursor-Fasern, z. B. Acrylfasern, bei der Herstellung von Kohlenstofffasern verwenden. Ferner können sie für die Modifikation von Epoxidharzen für verschiedenste Anwendungszwecke eingesetzt werden.

Die Umsetzung der Silane der Formel (I) oder der Formel (XXXV) oder von Gemischen dieser Silane mit Organosiloxanen der Formel (VIII) führt zu neuen Polyorganosiloxanen. Es wurde überraschenderweise gefunden, dass diese neuen Polyorganosiloxane einerseits ausgezeichnete Reaktivität, insbesondere bei Härtungsprozessen, aufweisen können und andererseits verbesserte Effekte von mit ihnen behandelten Fasermaterialien bewirken können wie z. B. erhöhte ölabweisende Wirkung. Vorteile resultieren insbesondere auch dann, wenn die in den Silanen anwesenden funktionellen Gruppen (R² bzw. R²⁰) Acrylatreste enthalten, siehe z.B. Formeln (III), (IV), (V) und (XVI). Diese Acrylatreste sind dann auch in den nach Umsetzung mit Organosiloxanen erhaltenen Produkten enthalten und lassen sich härten bzw. polymerisieren, z.B. durch UV-Strahlung. Dies macht diese neuen Polysiloxane gut geeignet für die Beschichtung von Textilien.

Zur Herstellung der erfindungsgemäßen Polyorganosiloxane wird ein Silan der Formel (I) oder der Formel (XXXV) oder ein Gemisch solcher Silane mit einem Polyorganosiloxan der Formel (VIII) oder einem Gemisch solcher Polyorganosiloxane umgesetzt.

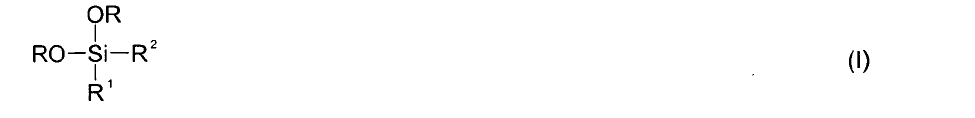

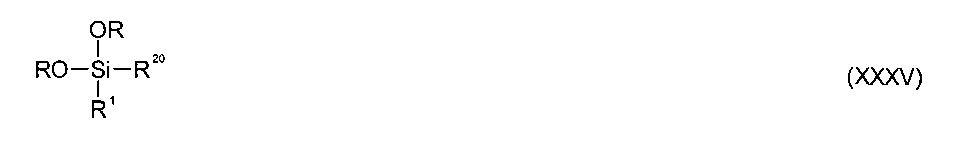

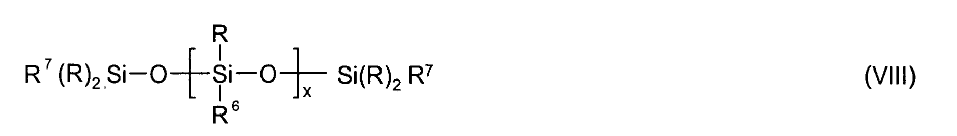

Das Polyorganosiloxan der Formel (VIII) kann Substituenten enthalten, z.B. kann R⁷ für R oder für OH oder für OR stehen, wobei R die oben und in Anspruch 1 genannte Bedeutung besitzt, und R⁶ kann für R oder einen Rest der Formel (IX) stehen.

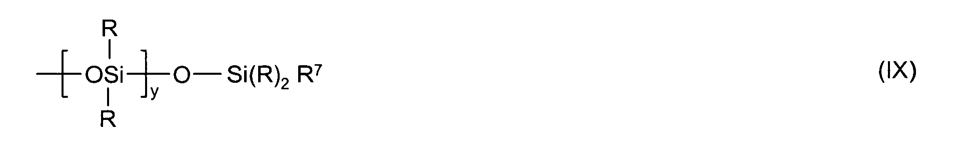

Vorzugsweise wird für die Umsetzung mit Silan(-gemisch) jedoch ein unsubstituiertes Polydialkylsiloxan verwendet, insbesondere ein Polydimethylsiloxan.

Die Verbindungen der Formel (VIII) werden im Folgenden der Einfachheit halber als "Polyorganosiloxane" bezeichnet, obwohl es sich für niedrige Werte von x um Oligo-organosiloxane handelt.
In Formel (VIII) ist
x eine Zahl von 0 bis 1500, vorzugsweise 10 bis 1500, und
y eine Zahl von 0 bis 500,
ferner stehen in den Formeln (VIII) und (IX) alle anwesenden Reste R⁷ für R oder OH oder für eine Gruppe OR, wobei R die oben genannte Bedeutung besitzt. Für die Umsetzung der Silane oder von Gemischen dieser Silane mit Polyorganosiloxanen der Formel (VIII) werden vorzugsweise das Polyorganosiloxan und das Silan in solchen Mengenverhältnissen eingesetzt, dass
bei der Umsetzung 1 bis 10000 Mol an Polyorganosiloxan pro Mol an Silan eingesetzt werden, vorzugsweise 5 bis 1000 Mol.
Die für diese Umsetzung verwendeten Polyorganosiloxane der Formel (VIII) enthalten mindestens zwei Reste R⁷ an den Enden der Polysiloxankette. Jeder Rest R⁷ steht für einen Rest R der oben genannten Bedeutung oder für eine Hydroxygruppe oder für eine Gruppe -OR, wobei R die oben genannte Bedeutung besitzt.
Die für die Umsetzung verwendeten Polyorganosiloxane können ferner, obwohl dies in Formel (VIII) nicht zum Ausdruck kommt, weitere funktionelle Gruppen in Seitenketten enthalten, z.B. Aminogruppen. In diesem Fall stehen einer oder mehrere der anwesenden Reste R⁶ für einen Rest mit einer solchen funktionellen Gruppe.
Außerdem können zusätzlich zu Polyorganosiloxanen der Formel (VIII) weitere Organosiloxane mitverwendet werden, z.B. niedrigmolekulare Oligodialkylsiloxane.

Werden für die Umsetzung der Silane mit Polyorganosiloxanen solche Polyorganosiloxane der Formel (VIII) verwendet, in denen keiner der Reste R⁷ für OH steht, so findet die Umsetzung unter den aus der Silikonchemie bekannten Bedingungen der Äquilibrierung statt, wobei ein Einbau der Silanstruktur in die Polysiloxankette erfolgt.
Ist dagegen einer oder mehrere der anwesenden Reste R⁷ eine OH-Gruppe, so können Kondensationsreaktionen zwischen diesen OH-Gruppen und OR-Gruppen des Silans unter Abspaltung von Alkohol ROH stattfinden.
Die für die Äquilibrierungs- bzw. Kondensationsreaktionen erforderlichen Bedingungen sind aus der Fachliteratur über Silikone bekannt. Vorzugsweise erfolgen die Umsetzungen, welche zu den neuartigen Polyorganosiloxanen führen, unter Mitverwendung eines Katalysators oder Katalysatorgemischs und bei einer Temperatur im Bereich von 80 bis 130°C. Als Katalysatoren geeignet sind gegebenenfalls Lewis-Säuren oder verdünnte Mineralsäuren. Bevorzugt jedoch sind basische Katalysatoren wie Alkalimetallhydroxide oder -alkoholate, oder die weiter unten genannten Katalysatoren.

Verwendbar sind, wie bereits erwähnt, Polyorganosiloxane der Formel (VIII), in denen zwei der anwesenden Reste R⁷ jeweils für eine OH-Gruppe stehen.

Die genannten Hydroxygruppen enthaltenden Polyorganosiloxane, die im Folgenden mit "α,ω-Dihydroxypolyorganosiloxane" bezeichnet werden, können also mit erfindungsgemäßen Silanen der Formel (XXXV) oder mit Silanen der Formel (I) umgesetzt werden. Diese Umsetzung kann, wie unten näher erläutert, so durchgeführt werden, dass entweder eine Äquilibrierung stattfindet, bei der Struktureinheiten der Silane in die Kette des α,ω-Dihydroxypolyorganosiloxans eingebaut werden. Oder aber, die Umsetzung wird so durchgeführt, dass Kondensationsreaktionen zwischen endständigen OH-Gruppen des Polysiloxans und den Silanen stattfinden. Die zweite Variante, nämlich Kondensation, ist in diesem Fall unter anderem deshalb bevorzugt, weil sie unter schonenderen Bedingungen, d.h. bei niedrigerer Temperatur durchgeführt werden kann als die Äquilibrierungsreaktion. Durch die genannten Umsetzungen entstehen Polyorganosiloxane, welche die aus den Silanen stammenden Einheiten R² bzw. R²⁰ enthalten.

Vorzugsweise jedoch werden keine Polysiloxane der Formel (VIII) verwendet, die OH-Gruppen enthalten, sondern unsubstituierte Polydimethylsiloxane.

Es sind prinzipiell 2 Arten von Umsetzungsmechanismen denkbar, nämlich eine Reaktionsführung, welche zu Äquilibrierungsreaktionen führt, oder eine Reaktionsführung, welche zu Kondensationsreaktionen führt. Die Kondensation läuft bei niedrigeren Temperaturen ab. Bei der Kondensation reagieren OR-Gruppen der Silane mit endständigen OH-Gruppen des α,ω-Dihydroxypolysiloxans unter Abspaltung von Alkohol ROH und Kettenverlängerung.
Die Umsetzung lässt sich als Kondensation bei einer Temperatur im Bereich von 80 bis 105°C während 3 bis 4 Stunden durchführen, vorzugsweise unter vermindertem Druck, z.B. bei einem Druck im Bereich von 100 mbar. Einzelheiten über Kondenstionsreaktionen sind aus der Silikonchemie bekannt. Damit Kondensation überhaupt stattfinden kann, muß das verwendete Polysiloxan an mindestens zwei Kettenenden Hydroxygruppen aufweisen.

Äquilibrierungsreaktionen sind ebenfalls aus der Literatur über Silikonchemie gut bekannt. Bei der Äquilibrierung werden in die Polysiloxankette Silaneinheiten insertiert. Die Äquilibrierung erfordert also, dass Si-O-Si-Bindungen in der Kette gespalten werden. Hieraus erklärt sich, dass für Äquilibrierung höhere Temperaturen erforderlich sind als für Kondensation. Die Umsetzung bei welcher erfindungsgemäße Polysiloxane entstehen, führt man für den Fall, dass Äquilibrierung gewünscht wird, bei einer Temperatur im Bereich von 110 bis 135°C während einer Zeit von 3 bis 4 Stunden durch. Falls das Polyorganosiloxan der Formel (VIII) keine OH-Gruppen enthält, wird die Äquilibrierungsreaktion vorzugsweise in Anwesenheit von Wasser durchgeführt, um OR-Gruppen zu OH-Gruppen zu hydrolysieren.

Die Umsetzung, welche zu erfindungsgemäßen neuartigen Polyorganosiloxanen führt, wird vorzugsweise unter Mitverwendung eines Katalysators oder eines Gemischs von Katalysatoren durchgeführt, und zwar sowohl bei der Umsetzung in Form einer Kondensation als auch in Form einer Äquilibrierung.
Geeignete Katalysatoren sind aus der Silikonliteratur bekannt. In manchen Fällen können saure Katalysatoren angewendet werden, z.B. Lewis-Säuren oder verdünnte Mineralsäuren; im Normalfall sind jedoch basische Katalysatoren besser geeignet und daher bevorzugt. Gut geeignete basische Katalysatoren sind Alkalimetallhydroxide wie NaOH, KOH oder LiOH und insbesondere Metallalkoholate. Unter den Metallalkoholaten sind Alkalimetallalkoholate der Formel M(OR) besonders gut geeignet. Diese Metallalkoholate können z.B. als 20 bis 30 %ige Lösung in dem zugrundeliegenden Alkohol eingesetzt werden. Hierbei steht M für Na oder K und R für einen Alkylrest mit 1 bis 4 Kohlenstoffatomen.
Weitere geeignete Katalysatoren sind 4-Dimethylamino-pyridin und bicyclische Verbindungen, welche ein oder mehrere Stickstoffatome als Ringglieder enthalten. Beispiele sind 1.5-Diazabicyclo [2.2.2.]-octan, 1.5-Diazabicyclo [4.3.0]-non-5-en und 1.8-Diazabicyclo [5.4.0] undec-7-en.

Die erfindungsgemäßen Silane der Formel (XXXV) enthalten zwei oder drei -OR-Gruppen.

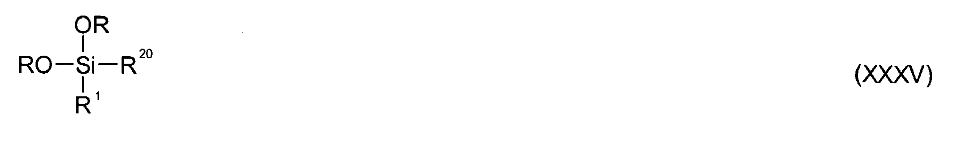

Hierbei stehen alle Reste R unabhängig voneinander für den Phenylrest oder für einen verzweigten oder unverzweigten Alkylrest mit 1 bis 18 Kohlenstoffatomen. Vorzugsweise stehen alle Reste R für den Methyl- oder den Ethylrest.
Der Rest R¹ in Formel (XXXV) steht für R oder für -OR oder für

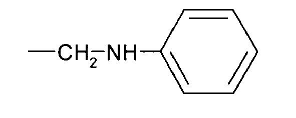

Der Rest R²⁰ in den Silanen der Formel (XXXV) befindet sich nach der Umsetzung mit Polyorganosiloxan noch in dem entstandenen neuen Polyorganosiloxan, während die Reste -OR mit dem Polyorganosiloxan reagieren, entweder mittels Kondensation oder mittels Äquilibrierung. Der Rest R²⁰ steht für einen Rest einer der Formeln (XXXVI) bis (XLI) oder einer der Formeln (XLI a) bis (XLI h)

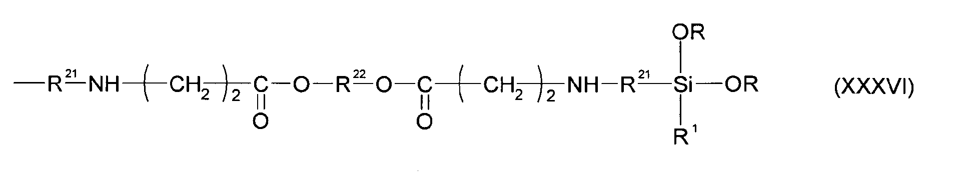

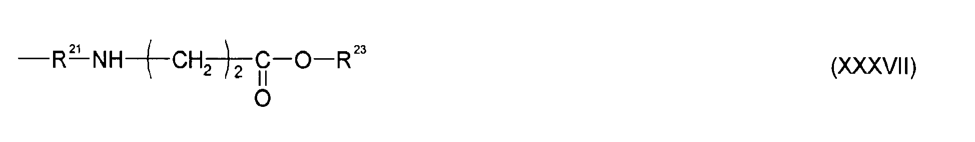

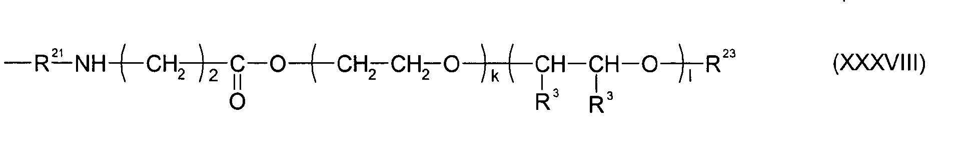

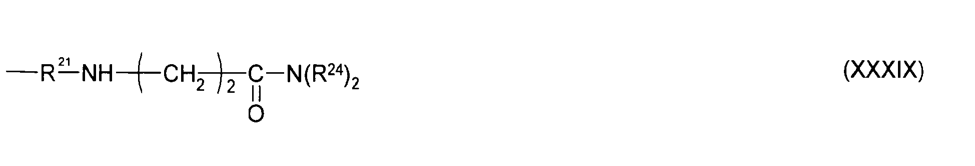

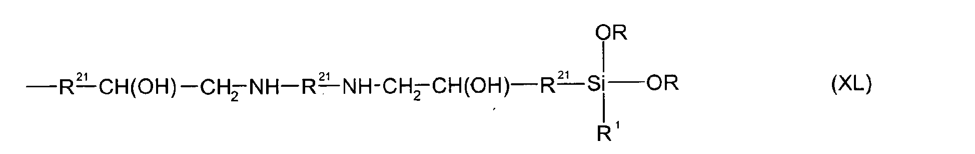

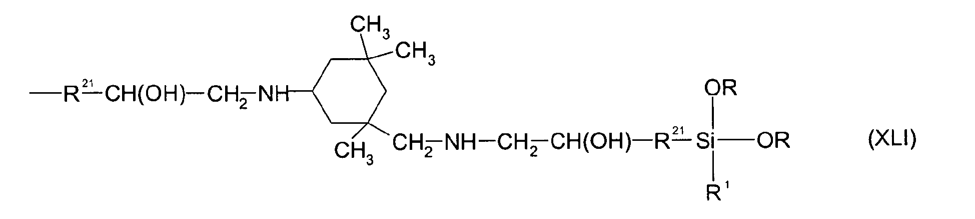

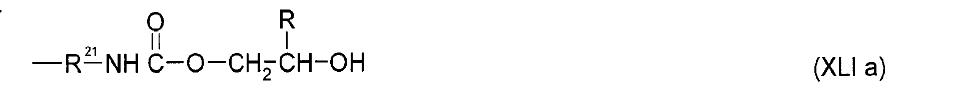

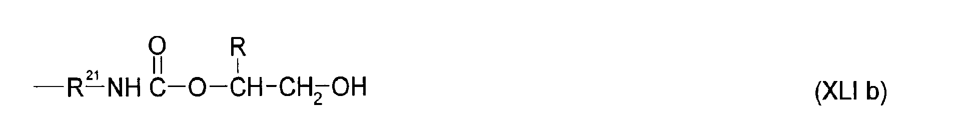

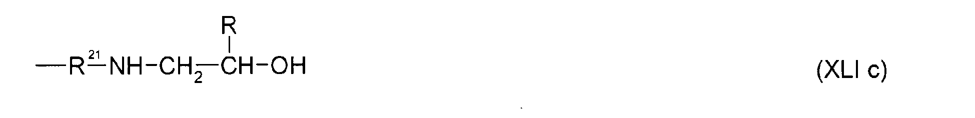

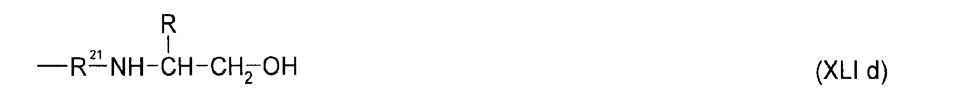

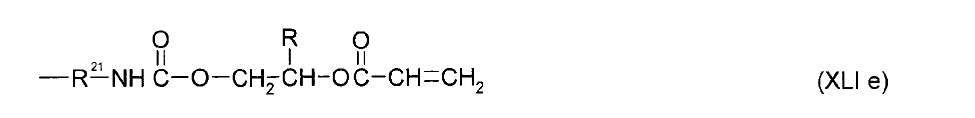

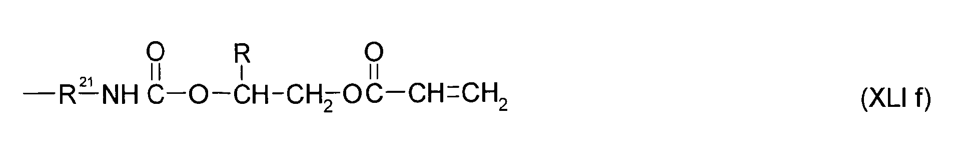

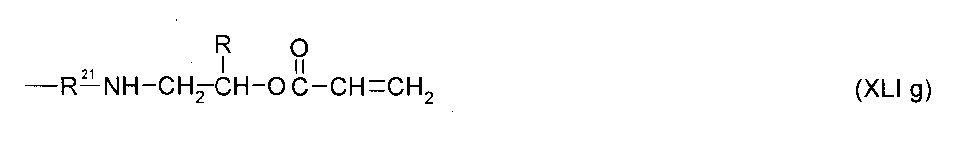

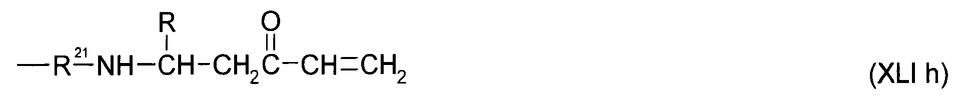

In diesen Formeln bedeuten:
- R²¹ einen linearen oder verzweigten Alkylenrest mit 3 bis 8 Kohlenstoffatomen, der durch eine oder mehrere NH-Brücken unterbrochen sein kann,
- R²² einen zweiwertigen Rest der Formel

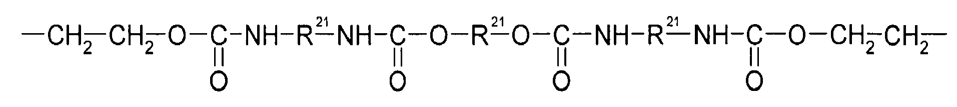

In dieser Formel besitzt jeder der Reste R²¹ die oben genannte Bedeutung oder steht für 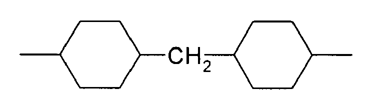 oder für 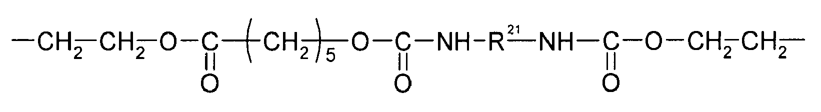
- R²³ einen linearen oder verzweigten Alkylrest mit 8 bis 16 Kohlenstoffatomen.
In der Formel (XXXVIII) besitzt der Rest R²³ entweder die oben genannte Bedeutung oder steht für H.
In Formel (XXXVIII) steht in jeder Einheit 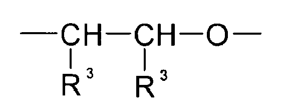 einer der Reste R³ für H und der andere für CH₃. k und I sind jeweils eine Zahl von 1 bis 22 und
die Summe k + l liegt im Bereich von 3 bis 25. Ferner können die einzelnen Einheiten 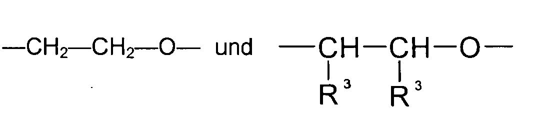 beliebig über die Kette verteilt sein.
In Formel (XXXIX) steht jeder der beiden Reste R²⁴ unabhängig vom anderen für einen linearen
oder verzweigten Alkylrest mit 1 bis 6 Kohlenstoffatomen.
In Formel (XL) besitzt jeder Rest R²¹ entweder die oben genannte Bedeutung oder steht für einen Rest der Formel

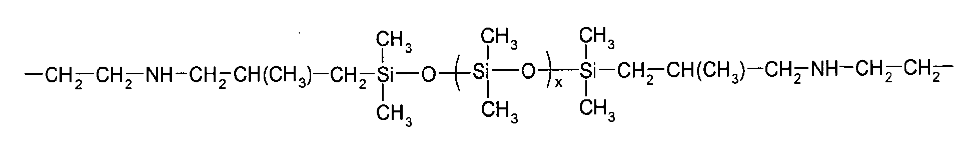

Hierin ist x eine Zahl von 0 bis 1500.
Das Silan der Formel (XXXV) kann auch ein Produkt sein, das durch Umsetzung eines Silans der Formel 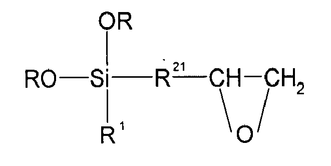 mit einem Polyetheramin oder einem Produkt T entsteht, wobei das Polyetheramin vorzugsweise ein Produkt der Formel 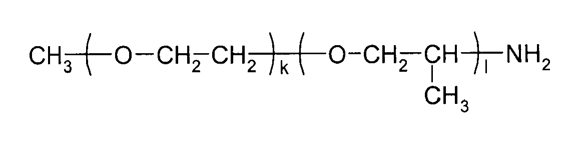 oder der Formel 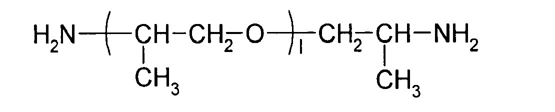 oder der Formel 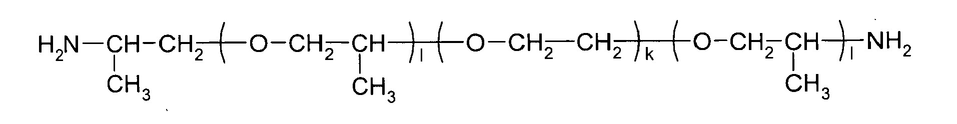 oder der Formel 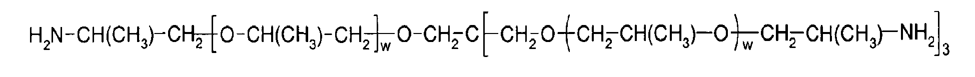 ist,
wobei w eine Zahl von 2 bis 8 ist,
wobei k und l jeweils einen Wert von 1 bis 22 besitzen
und das Produkt T ein Produkt einer der Formeln F₁ bis F₃ ist 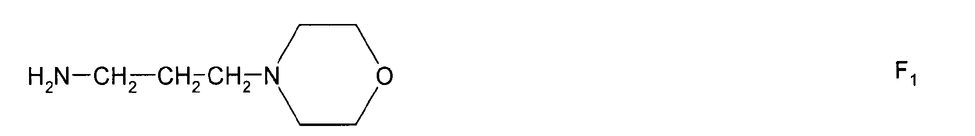 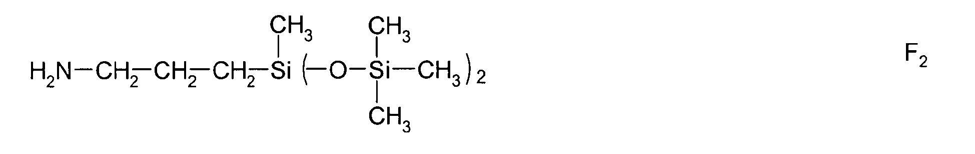 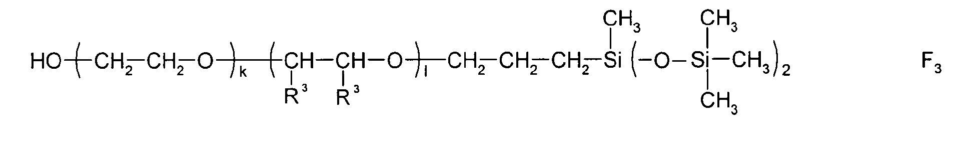 oder wobei das Produkt T ein 3-(2-aminoethyl)-aminopropyl-methyl-silsesquioxan mit endständiger-OCH₃-Gruppe ist.

Die erfindungsgemäßen neuen Polyorganosiloxane können hergestellt werden durch Umsetzung eines Polyorganosiloxans der Formel (VIII) 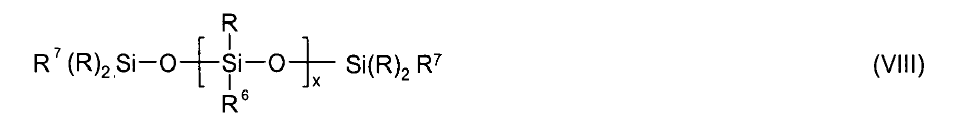 mit entweder einem erfindungsgemäßen, oben beschriebenen Silan der Formel (XXXV) oder
mit einem Silan der Formel (I)

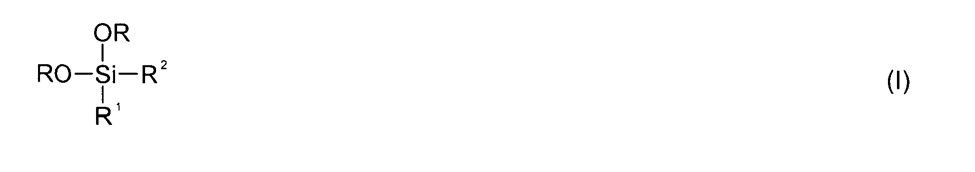

Die Silane der Formel (I) wurden oben im Zusammenhang mit den Aussagen über die Lösung der Aufgabe beschrieben.
Für die Umsetzung mit Polyorganosiloxan können auch mehrere der Silane der Formel (I) oder mehrere Silane der Formel (XXXV) verwendet werden oder auch Gemische, die sowohl ein oder mehrere Silane der Formel (I) und ein oder mehrere Silane der Formel (XXXV) enthalten.

Für den Fall, dass mit Silanen der Formel (I) gearbeitet wird, ist besonders bevorzugt, wenn Silane oder Silangemische der Formel (I) verwendet werden, die mindestens ein Silan der Formel (I) enthalten, bei dem R² ein Rest der Formel (V) ist 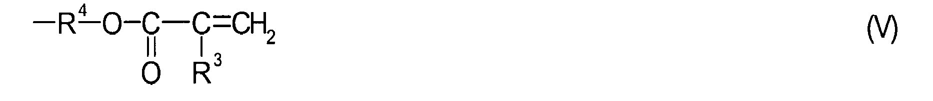 Außerdem wurde gefunden, dass es in vielen Fällen von Vorteil ist, wenn Silane mit Acrylatresten eingesetzt werden, bei denen der Rest R³ eine Methylgruppe ist, also Methacrylverbindungen.
Die Silane der Formel (I) und der Formel (XXXV) sind auf dem Markt erhältliche Produkte oder können nach Methoden hergestellt werden, die dem Chemiker bekannt sind. Mögliche Synthesen sind die Umsetzung eines Silans, das eine Si-H-Bindung und 2 oder 3 an Si gebundene Chloratome enthält, mit Allylverbindungen, z.B. mit Allylchlorid und anschließender weiterer Umsetzung mit Ammoniak oder einem Amin (wobei das endständige Chloratom der usprünglichen Allylgruppe durch den entsprechenden stickstoffhaltigen Rest substituiert wird) sowie nachfolgende Substitution der an Si gebundenen Chloratome durch OR mittels Umsetzung mit Alkohol. Ferner sind phosphorhaltige Silane der Formel (I) erhältlich durch Addition von (CH₃O)₂P(O)-H an Bisalkoxy- oder Trisalkoxysilane, welche Substituenten mit C=C-Doppelbindungen enthalten, z.B. an

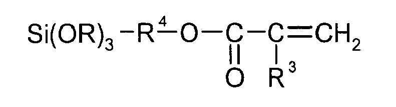

Die Herstellung gewisser fluorhaltiger Silane der Formel (I) kann durch Umsetzung von 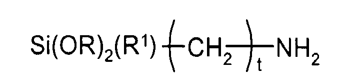 mit Fluoralkylresten enthaltenden Epoxiden erfolgen (siehe JP-2000-53950 A2 und JP-2000-53686 A2).
Silane der Formel (I), in denen der Rest R² ein Rest der Formel (V) ist, lassen sich herstellen durch Umsetzung von (RO)₂Si(R¹)-R⁴-Cl mit
CH₂=C(R³) -COOH.

Ferner sind solche Silane von der Firma ABCR, DE beziehbar.
Silane der Formel (I), in denen der Rest R² ein Rest der Formel (VI) ist, können erhalten werden durch Umsetzung von (Cl)₂Si(R)-H mit 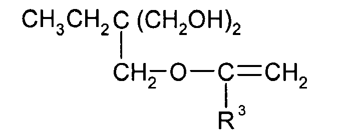 (Die letztgenannte Verbindung ist erhältlich durch Umsetzung einer der 3 OH-Gruppen von 1.1.1-Tris-methylol-propan mit (Meth)Allylchlorid),
wobei sich die Si-H-Bindung an die C=C-Doppelbindung addiert, anschließend Veresterung der beiden übrigen CH₂OH-Gruppen mit (Meth)Acrylsäure und Substitution der Chloratome durch OR-Gruppen mittels Umsetzung mit Alkohol ROH.
Silane der Formel (I), bei denen der Rest R² ein Rest der Formel (III) oder der Formel (IV) ist, können erhalten werden durch Addition eines Lactons, z.B. γ-Butyrolacton, an ein Aminoalkyl-dialkoxysilan und anschließender Umsetzung mit (Meth-)Acrylsäure oder Derivaten davon. Silane der Formel (I), bei denen der Rest R² ein Rest der Formel (VII) ist, können hergestellt werden, durch Addition von (Meth-)Acrylsäureester an Aminoalkyl-dialkoxysilan.

Als Silane der Formel (I) werden bevorzugt Silane verwendet, im welchen der Rest R² Acrylateinheiten oder Methacrylateinheiten enthält. Solche Silane sind auf dem Markt erhältlich, z.B. von der Firma ABCR GmbH & Co., Karlsruhe, DE. Ferner können solche Silane nach der Lehre der DE-A 102 19 734 hergestellt werden.

Silane der Formel (I), in denen der Rest R² ein Rest der Formel (XI) und R¹⁰ ein Rest der Formel (XXIII) ist, können erhalten werden, indem man ein aminofunktionelles Silan (Formel (I) mit R¹ = R und R² = -R⁴-NH₂) mit einem Alkylendiacrylat umsetzt.

Silane, bei denen der Rest R¹⁰ ein Rest einer der Formeln (XVII), (XVIII) oder (XX) ist, können erhalten werden durch Umsetzung entsprechender Epoxide mit entsprechenden Aminen.

Silane der Formel (XII) mit R¹⁴ = Alkylrest können erhalten werden durch Umsetzung von 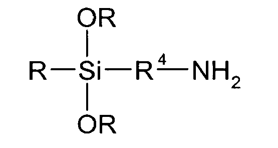 mit einem Acrylsäureester.

Silane der Formel (I), in welchen der Rest R² Acrylateinheiten oder Methacrylateinheiten enthält, sind auf dem Markt erhältlich, z.B. von der Firma ABCR GmbH & Co., Karlsruhe, DE. Ferner können solche Silane, z. B. der Formel (XVI), hergestellt werden, indem man 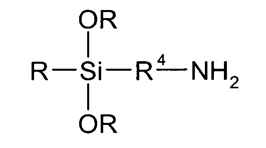 mit einem Alkylencarbonat umsetzt und anschließend mit Acrylsäure(-ester) umsetzt.
Die erfindungsgemäßen Silane der Formel (XXXV) sind ebenfalls nach üblichen Methoden herstellbar, z.B. durch Umsetzung eines handelsüblichen Silans der Formel 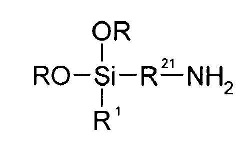 oder der Formel 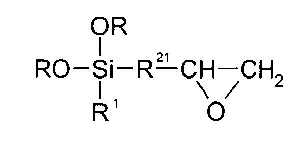 mit Acrylaten (in Form einer Michael-Addition) oder mit cyclischen Carbonaten wie Ethylencarbonat oder mit ein- oder mehrwertigen Aminen (wobei die Epoxigruppe des Silans mit einer Aminogruppe unter Ringöffnung reagiert). Ferner können Silane der Formel (XXXV) erhalten werden durch Umsetzung der genannten Amino- oder Epoxisilane mit Acrylaten oder mit Diacrylaten, wobei die Acrylate gebildet wurden durch Umsetzung von 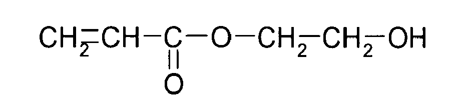 mit Diisocyanaten und Diolen. Hierbei entstehen Acrylate, welche Urethaneinheiten enthalten.

Die Erfindung wird nachstehend durch Ausführungsbeispiele veranschaulicht.

### Beispiel 1: Addition von Acrylat an Aminosilan, Herstellung eines Silans der Formel (I) und dessen Umsetzung mit einem Gemisch zweier Polysiloxane

51,0 g Si(CH₃)(OCH₃)₂(CH₂CH₂CH₂NHCH₂CH₂NH₂)
und
49,0 g Acrylsäureester
wurden unter Rühren miteinander vermischt (es entstand ein Produkt mit klarem Aussehen), auf 60°C erwärmt und 4 Stunden bei 60°C gehalten.
Man erhielt ein klares, beigefarbenes und viskoses Additionsprodukt = Silan der Formel (I) mit R = CH₃, R¹ = CH₃ und R² = ein Rest der Formel (XII) mit R⁴ = 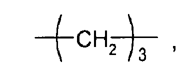 p = 1, R³ = H, R¹⁴ = Alkyl.

Der verwendete Acrylsäureester war ein Gemisch von Decyl- und Octyl-acrylat.
42,2 g α,ω-Dihydroxy-Polydimethylsiloxan (ca. 100 mPa.s)
102,5 g α,ω-Dihydroxy-Polydimethylsiloxan (ca. 600 mPa.s)
2,7 g Si(CH₃)(OCH₃)₂(CH₂CH₂CH₂NHCH₂CH₂NH₂)
und
1,3 g des oben genannten Silans der Formel (I)
wurden gemeinsam vorgelegt und unter Rühren auf 90°C erwärmt. Nach dem Erreichen der Temperatur wurde der Katalysator (0,3 g Natrium-methylat, 6 % in Methanol) zugegeben, 15 Minuten bei der genannten Temperatur weitergerührt und anschließend ein Vakuum von 200 mbar angelegt und 1 Stunde gehalten. Anschließend wurde bei Normaldruck nochmals Katalysator (0,3 g Natrium-methylat, 6 % in Methanol) zugegeben, 15 Minuten bei der genannten Temperatur weitergerührt und anschließend noch mal Vakuum (200 mbar) angelegt. Nach weiteren 3 Stunden wurde das Vakuum entlastet und das Öl abgekühlt.
Es entstand ein dünnflüssiges, leicht trübes Öl.

### Beispiel 2 a Herstellung eines Silans der Formel (XXXV) durch Umsetzung eines Aminosilans mit Alkylendiacrylat

37,16 g CH₂CH(CO)O(CH₂CH₂CH₂CH₂CH₂CH₂)O(CO)CHCH₂
und
62,84 g Si(OCH₂CH₃)₂(CH₃)(CH₂CH₂CH₂NH₂)
wurden zusammen vorgelegt und ohne Lösungsmittel unter Rühren auf 60°C erwärmt. Das Gemisch wurde 5 Stunden bei dieser Temperatur gehalten.
Man erhielt eine leicht bräunliche, trübe Flüssigkeit.

### Beispiel 2 b, Umsetzung des Silans von Beispiel 2a mit einem Gemisch von Polysiloxanen

41,7 g α,ω-Dihydroxy-Polydimethylsiloxan (ca. 100 mPa.s)
99,3 g α,ω-Dihydroxy-Polydimethylsiloxan (ca. 600 mPa.s)
und
8,7 g des oben genannten Silans
wurden gemeinsam vorgelegt und unter Rühren auf 90°C erwärmt. Nach dem Erreichen der Temperatur wurde der Katalysator (0,3 g Natrium-methylat, 6 % in Methanol) zugegeben, 15 Minuten bei der genannten Temperatur weitergerührt und anschließend ein Vakuum von 200 mbar angelegt. Nach 7 Stunden wurde das Vakuum entlastet und das Öl abgekühlt.
Es entstand ein dünnflüssiges, trübes Öl.

### Beispiel 2 c, Herstellung eines Silans der Formel (XXXV) und dessen Umsetzung mit einem Gemisch zweier Polysiloxane

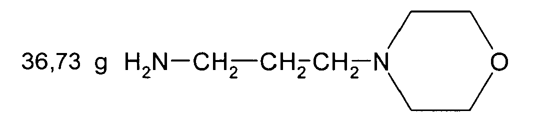

und 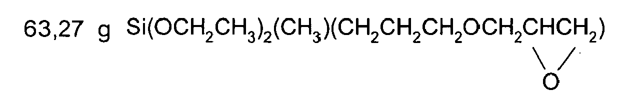 wurden gemeinsam mit 11,42 g eines Katalysatorgemischs auf Basis Triethanolamin vorgelegt und unter Rühren auf 70°C erwärmt. Es wurde 6 Stunden bei dieser Temperatur gehalten. Man erhielt eine leicht gelbliche Flüssigkeit.

43,3 g α,ω-Dihydroxy-Polydimethylsiloxan (ca. 100 mPa.s)
100,5 g α,ω-Dihydroxy-Polydimethylsiloxan (ca. 600 mPa.s)
und
6,5 g des oben genannten Silans
wurden gemeinsam vorgelegt und unter Rühren auf 90°C erwärmt. Nach dem Erreichen der genannten Temperatur wurde für 1 Stunde ein Vakuum von 200 mbar angelegt. Anschließend wurde bei Normaldruck der Katalysator (0,1 g Natrium-methylat, 6 % in Methanol) zugegeben, 15 Minuten bei 90°C weitergerührt und anschließend nochmal Vakuum (200 mbar) angelegt.

Nach 1 ½ Stunden wurde das Vakuum wieder entlastet und das Öl abgekühlt. Es entstand ein dickflüssiges, trübes Öl.

## Patentansprüche

1. Monomere Silane der allgemeinen Strukturformel (XXXV) 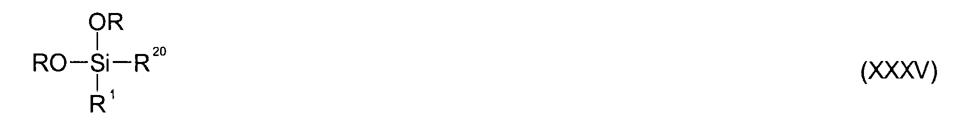 worin alle Reste R unabhängig voneinander für den Phenylrest oder für einen verzweigten oder unverzweigten Alkylrest mit 1 bis 18 Kohlenstoffatomen, vorzugsweise für -CH₃ oder -CH₂-CH₃ stehen, worin R¹ für R oder für OR oder für 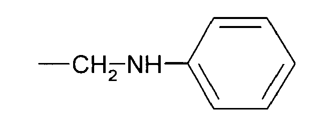 steht,
worin R²⁰ für einen Rest einer der Formeln (XXXVI) bis (XLI) oder einer der Formeln (XLI a) bis (XLI h) steht 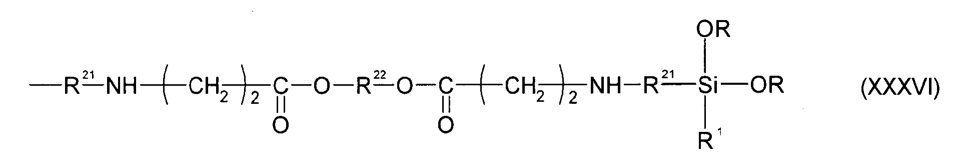 worin R²¹ für einen linearen oder verzweigten Alkylenrest mit 3 bis 8 Kohlenstoffatomen steht, der durch eine oder mehrere -NH-Brücken unterbrochen sein kann und worin R²² für einen linearen oder verzweigten Alkylenrest mit 6 bis 18 Kohlenstoffatomen steht,
oder wobei R²² ein zweiwertiger Rest der Formel 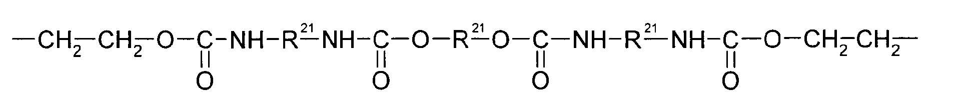 ist, worin jeder der Reste R²¹ entweder die oben genannte Bedeutung besitzt oder für einen Rest der Formel 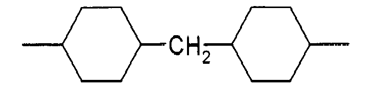 steht,
oder worin R²² für einen Rest der Formel 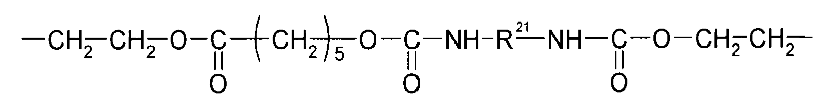 steht 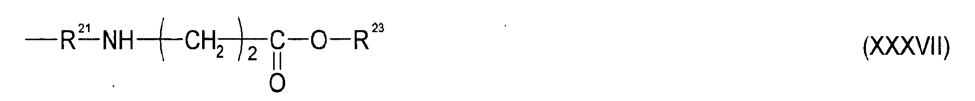 worin R²³ für einen linearen oder verzweigten Alkylrest mit 8 bis 16 Kohlenstoffatomen steht, 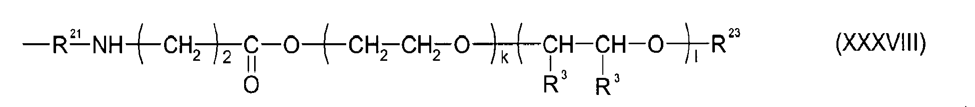 wobei in Formel (XXXVIII) R²³ entweder die oben genannte Bedeutung besitzt oder für H steht,
worin einer der Reste R³ für H und der andere für CH₃ steht, k und l jeweils für eine Zahl von 1 bis 22 stehen und wobei die Summe k + I im Bereich von 3 bis 25 liegt und wobei die einzelnen Einheiten 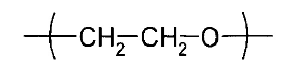 und 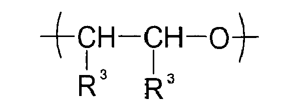 beliebig über die Kette verteilt sein können, 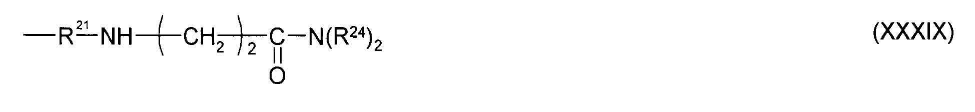 worin jeder der beiden Reste R²⁴ unabhängig voneinander für einen linearen oder verzweigten Alkylrest mit 1 bis 6 Kohlenstoffatomen steht, 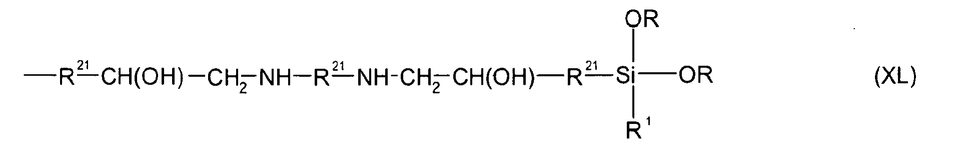 wobei in Formel (XL) R²¹ entweder die oben genannte Bedeutung besitzt oder für einen zweiwertigen Rest der Formel 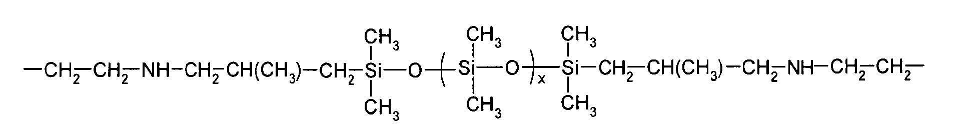 steht, worin x eine Zahl von 0 bis 1500 ist, 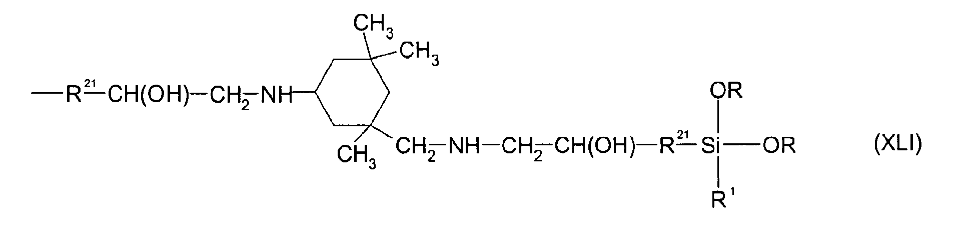 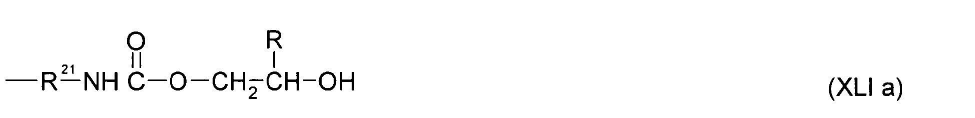 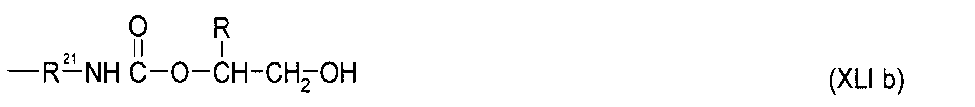 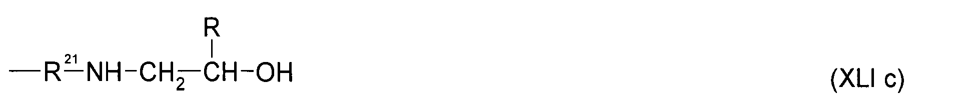 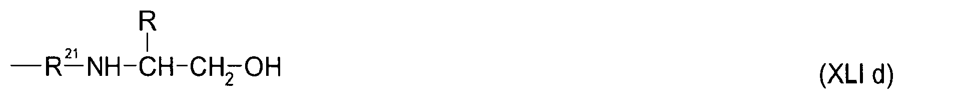 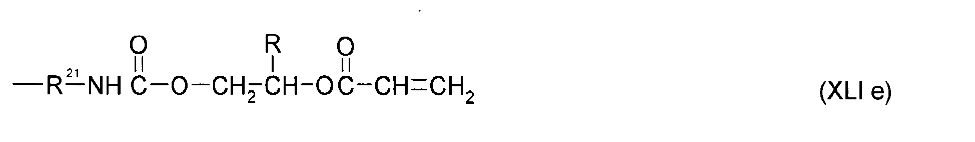 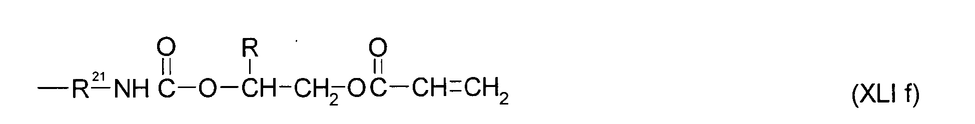 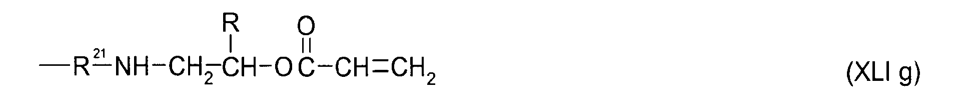 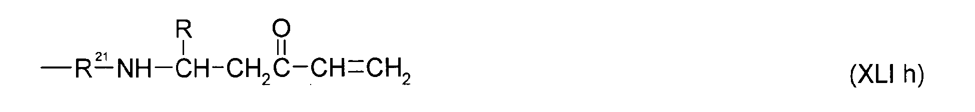 wobei das Silan der Formel (XXXV) auch ein Produkt sein kann, das durch Umsetzung eines Silans der Formel 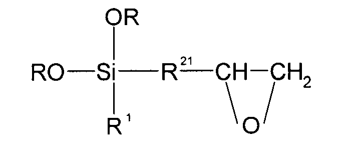 mit einem Polyetheramin oder einem Produkt T entsteht, wobei das Polyetheramin vorzugsweise ein Produkt der Formel 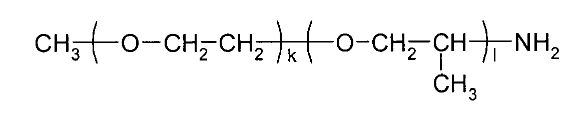 oder der Formel 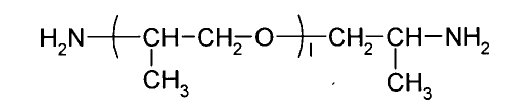 oder der Formel 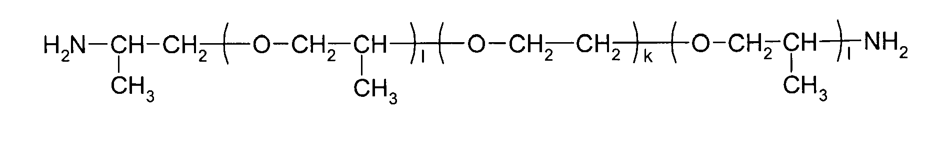 oder der Formel 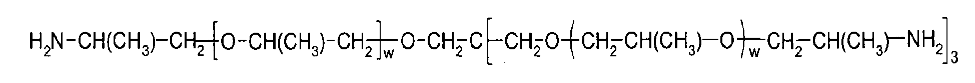 ist,
wobei w eine Zahl von 2 bis 8 ist,
wobei k und I jeweils einen Wert von 1 bis 22 besitzen
und das Produkt T ein Produkt einer der Formeln F₁ bis F₃ ist 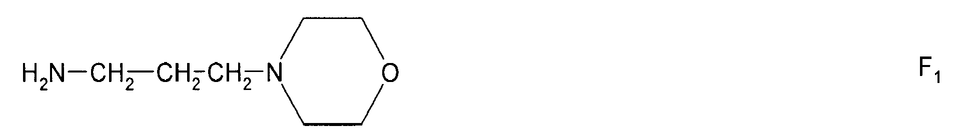 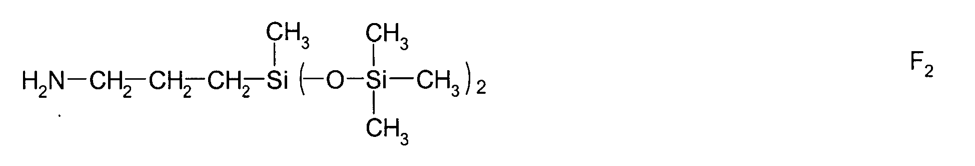 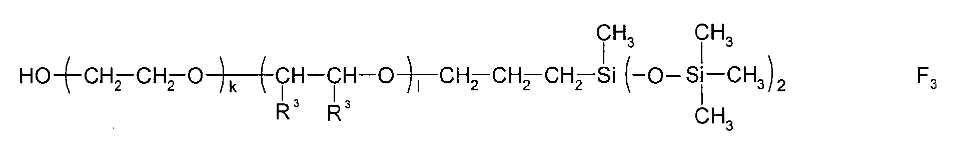 oder wobei das Produkt T ein 3-(2-aminoethyl)-aminopropyl-methyl-silsesquioxan mit endständiger -OCH₃-Gruppe ist.

2. Polyorganosiloxane, herstellbar durch Umsetzung eines Polyorganosiloxans der Formel (VIII) oder eines Gemischs von Polyorganosiloxanen der Formel (VIII) 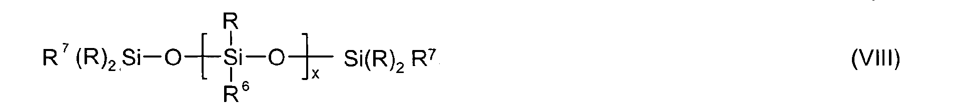 wobei R⁶ für R oder für einen Rest der Formel (IX) steht 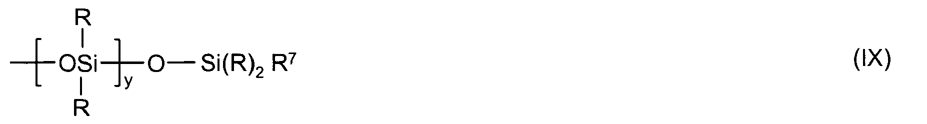 wobei x eine Zahl von 0 bis 1500 ist, vorzugsweise von 10 bis 1500,
y eine Zahl von 0 bis 500 ist,
worin alle anwesenden Reste R⁷ für R oder für OH oder für OR stehen und alle Reste R die in Anspruch 1 genannte Bedeutung besitzen,
mit einem Silan der Formel (I) oder der Formel (XXXV) oder mit einem Gemisch solcher Silane 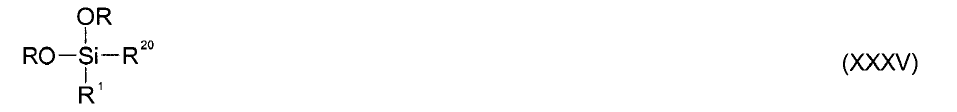 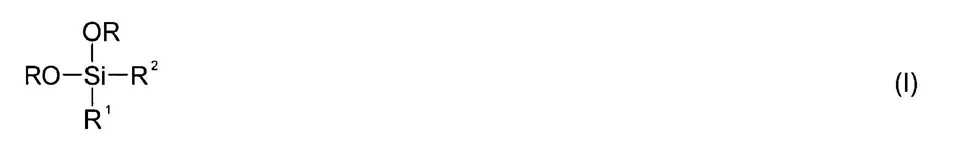 worin R, R²⁰ und R¹ die in Anspruch 1 genannten Bedeutungen besitzen und wobei R² für den Vinylrest oder für einen linearen oder verzweigten Alkylrest mit 1 bis 18 Kohlenstoffatomen steht, der durch eine oder mehrere, gegebenenfalls quaternierte, Aminogruppen, Amidogruppen, Mercaptogruppen, Epoxygruppen, Phosphonogruppen, Hydroxygruppen
oder Fluoratome substituiert sein kann,
oder wobei
R² für einen Rest der Formel (II), der Formel (III) oder der Formel (IV) steht, 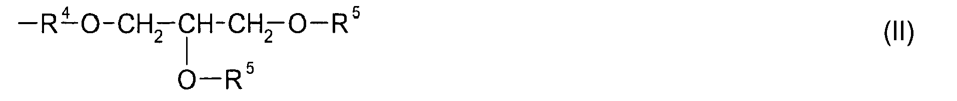 worin beide Reste R⁵ für 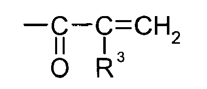 stehen, oder einer der Reste R⁵ für H und der andere für 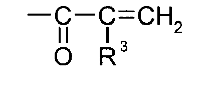 steht, 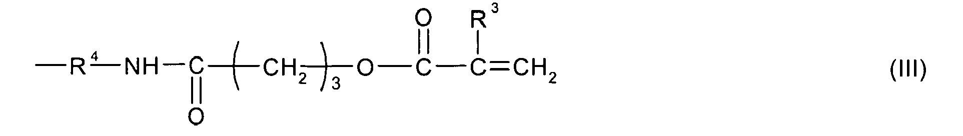 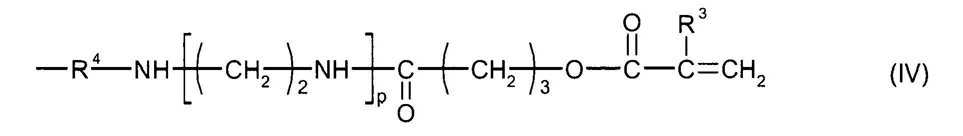 wobei p 0, 1 oder 2 ist,
wobei R³ jeweils für H oder CH₃ steht, oder wobei R² für einen Rest der Formel (V) steht 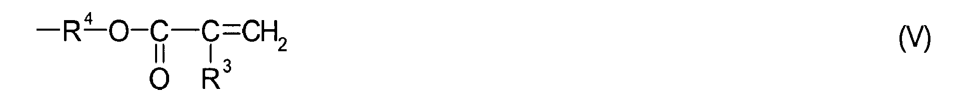 wobei in den Formeln (III), (IV) und (V) R⁴ jeweils für einen zweiwertigen linearen oder verzweigten Kohlenwasserstoffrest mit 1 bis 4 Kohlenstoffatomen steht,
oder wobei R² für einen Rest der Formel (VI) oder der Formel (VII) oder der Formel (X) steht 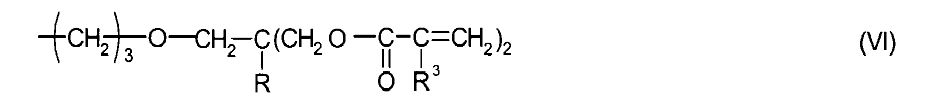 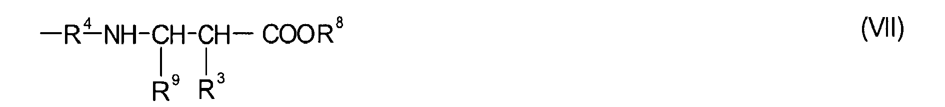 worin R⁸ für H oder für CH₃ oder für C₂H₅ oder für -CH₂CH₂-OH steht und R⁹ für H oder für -COOR⁸ steht 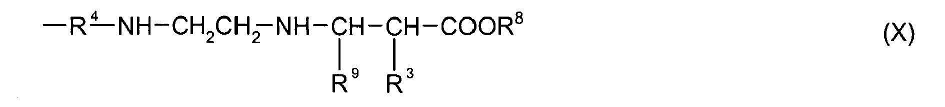 oder worin R² für einen Rest einer der Formeln (XI), (XIa) oder (XII) bis (XX) oder der Formel (XVIIIa) oder Formel (XXa) oder Formel (XXb) oder Formel (XXc) steht, 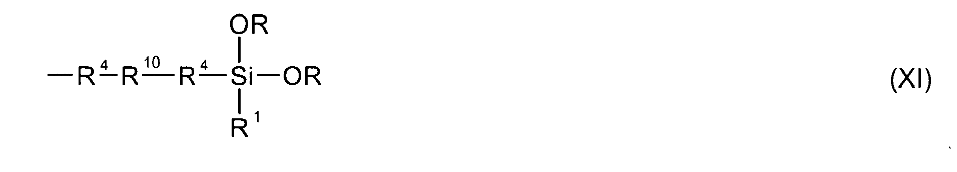 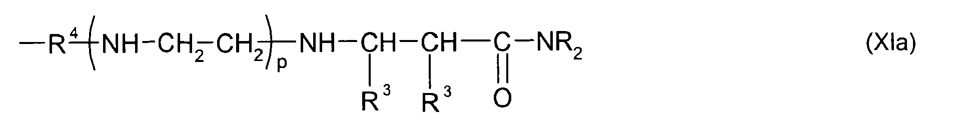 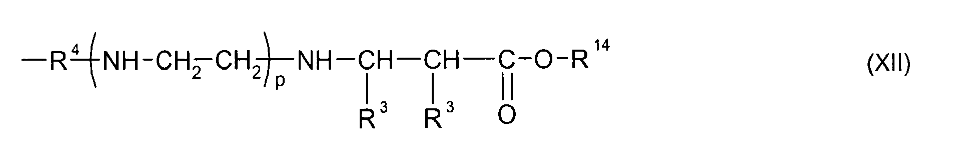 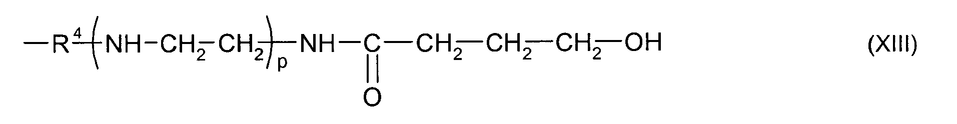 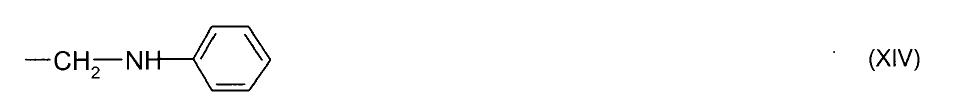 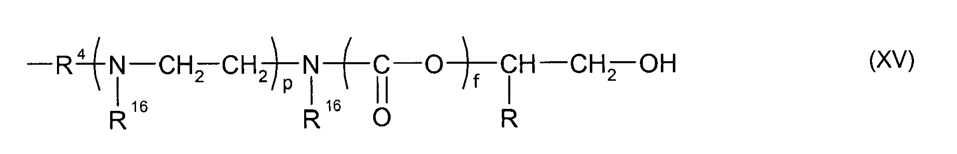 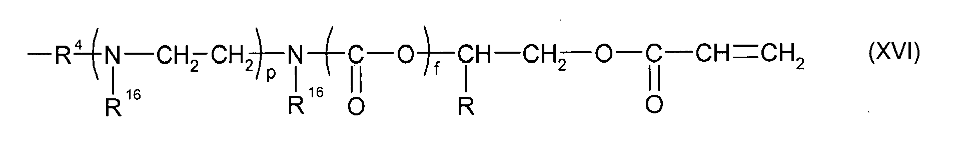 wobei p für 0, 1 oder 2 steht,
in allen Formeln R⁴ für einen zweiwertigen linearen oder verzweigten Kohlenwasserstoffrest mit 1 bis 4 Kohlenstoffatomen steht,
R³ jeweils für H oder CH₃ steht,
R¹⁴ für H oder einen linearen oder verzweigten Alkylrest mit 1 bis 18 Kohlenstoffatomen oder für einen Rest der Formel (XIX) steht,
worin die einzelnen Einheiten -(CH₂-CH₂-O)- und -(CHR³-CHR³-O)- beliebig über die Kette verteilt sein können, worin k und l jeweils eine Zahl im Bereich von 1 bis 22 sind und die Summe k+l im Bereich von 3 bis 25 liegt,
worin f für 0 oder 1 steht,
alle Reste R¹⁶ unabhängig voneinander für H oder für 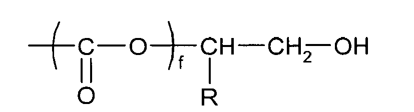 oder für 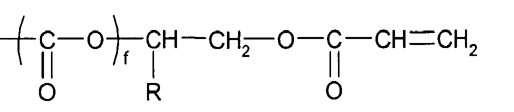 stehen, 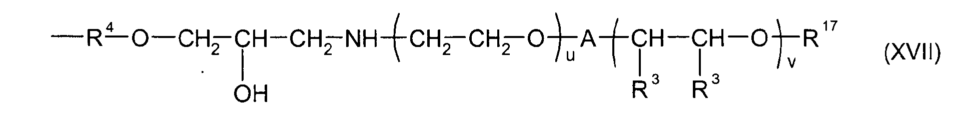 worin A für eine direkte Bindung oder für einen zweiwertigen Rest der Formel 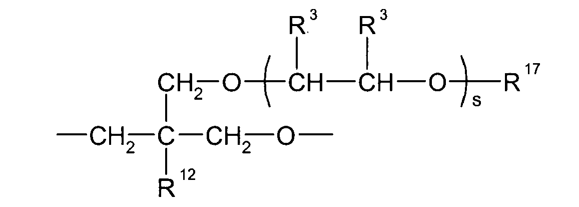 steht, wobei im Fall von Formel (XVII) die Werte von u, v und s so gewählt sind, dass das Äquivalentgewicht dieses Restes R² im Bereich von 100 bis 5000 liegt, wobei eins oder zwei von u, v und s auch den Wert 0 annehmen können und wobei die einzelnen Einheiten
-CH₂-CH₂-O- und 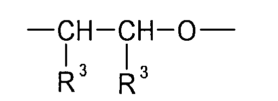 beliebig über die Kette verteilt sein können,
wobei R¹² für H oder C₂H₅ steht und
wobei R¹⁷ für R oder für -R⁴-NH₂ oder für 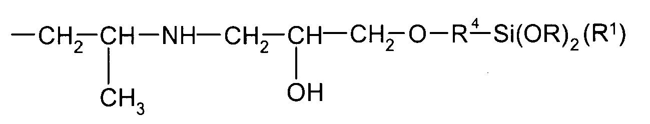 steht, 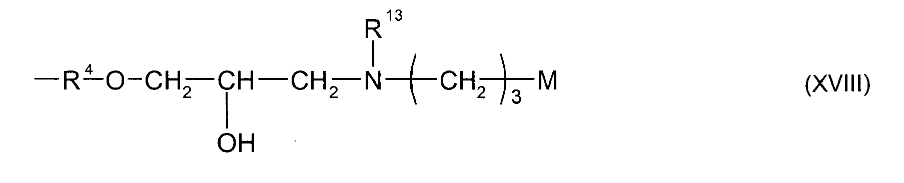 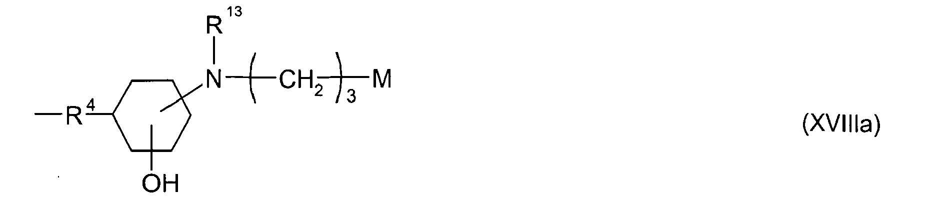 wobei M ausgewählt ist aus 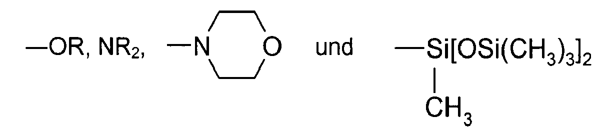 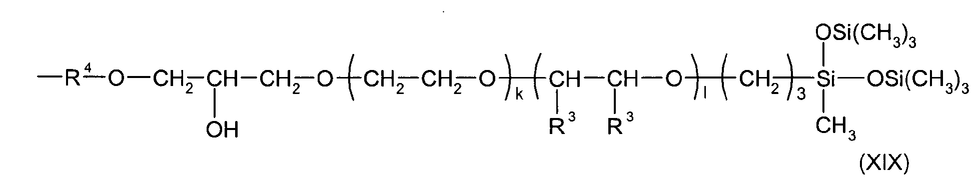 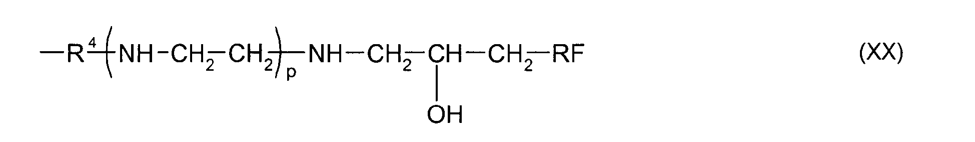 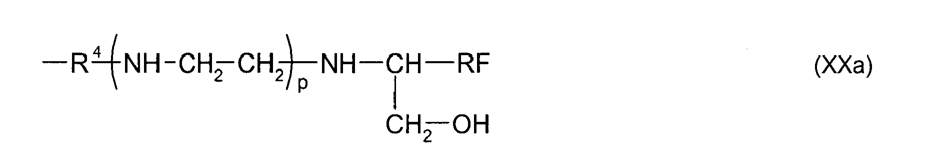 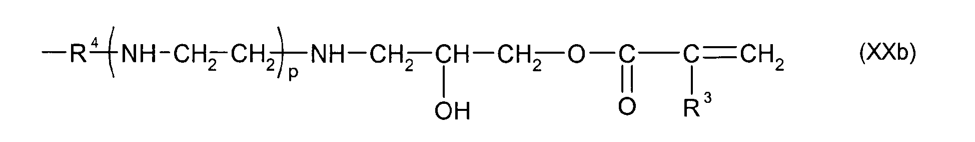 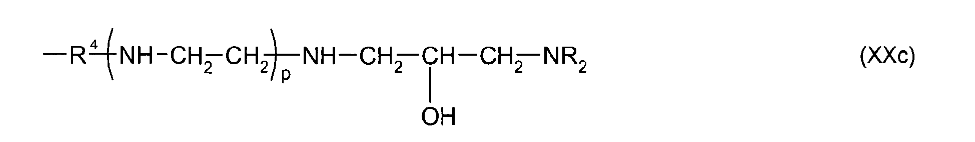 worin RF für einen Perfluoralkylrest mit 5 bis 23 Kohlenstoffatomen steht,
worin R¹⁰ für einen zweiwertigen Rest einer der Formeln (XXI) bis (XXIVa) steht, 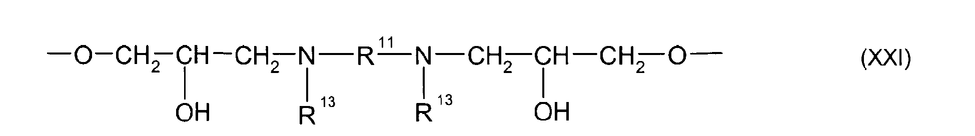 worin R¹³ für H oder -CH(CH₃)₂ oder für -CH₂-CH(CH₃)₂ steht, 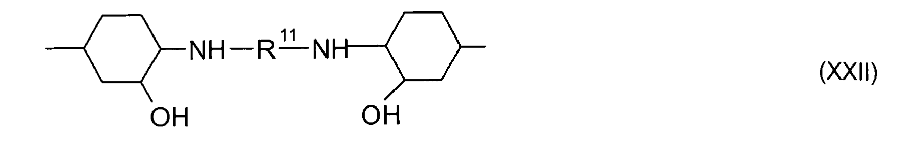 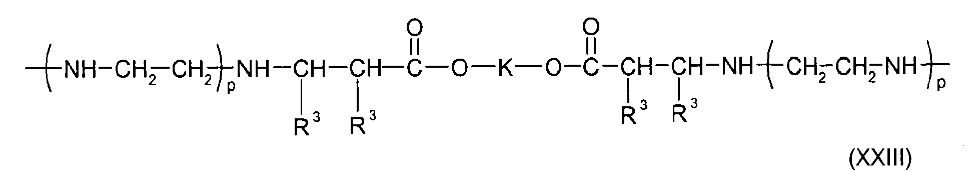 worin K für einen linearen oder verzweigten Alkylenrest mit 2 bis 18 Kohlenstoffatomen steht, 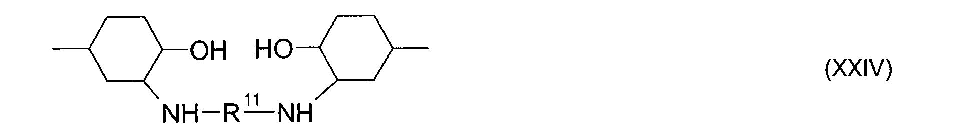 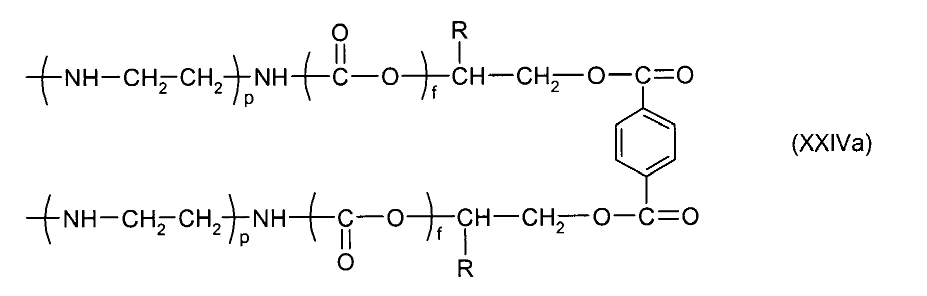 worin f für 0 oder 1 steht
wobei jeder der Reste R¹¹ für 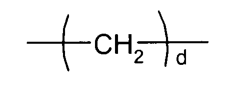 worin d eine Zahl von 1 bis 6 ist,
oder für einen Rest einer der Formeln (XXV) bis (XXXI) steht, 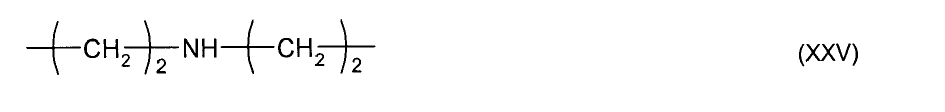 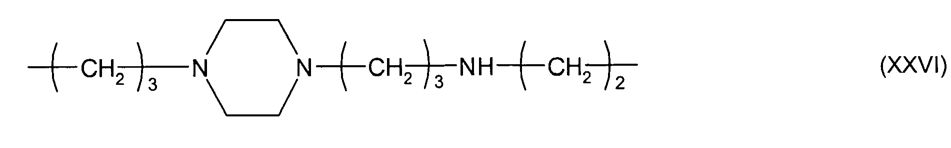 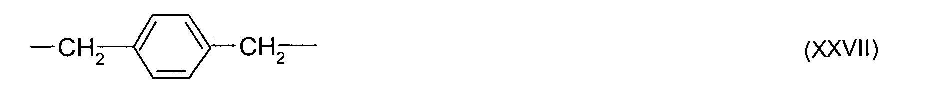 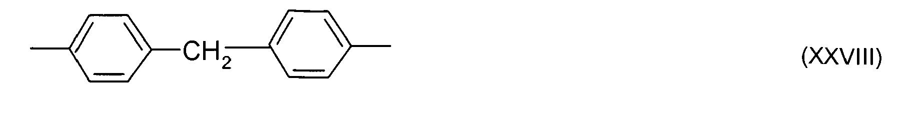 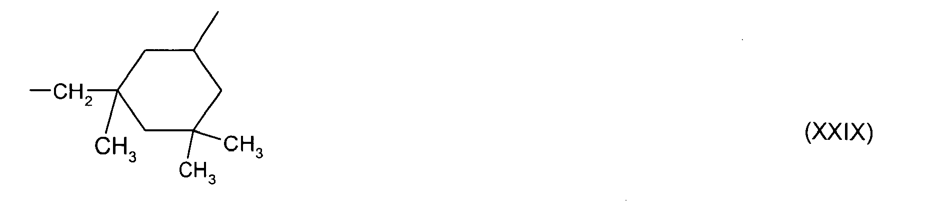 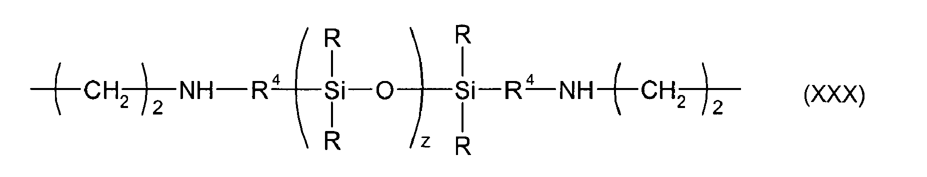 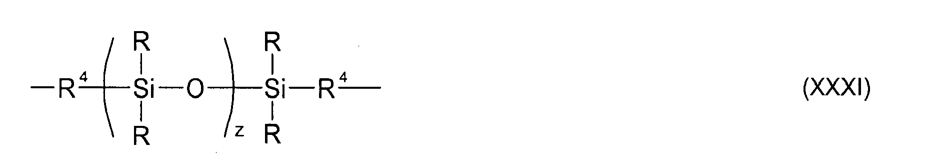 worin z eine Zahl von 8 bis 500, vorzugsweise von 8 bis 20, ist,
wobei alle oder ein Teil der Stickstoffatome, welche in den oben genannten Formeln vorhanden sind und die nicht Teil einer Amidgruppe sind, in quaternisierter Form vorliegen können.

3. Polyorganosiloxane nach Anspruch 2, **dadurch gekennzeichnet, dass** für die Umsetzung mit Silan als Polyorganosiloxan der Formel (VIII) ein Polydimethylsiloxan verwendet wird.

4. Polyorganosiloxane nach Anspruch 2 oder 3, **dadurch gekennzeichnet, dass** bei der Umsetzung 1 bis 10000 Mol an Polyorganosiloxan pro Mol an Silan eingesetzt werden, vorzugsweise 5 bis 1000 Mol.

5. Verwendung der Polyorganosiloxane gemäß Anspruch 2, 3 oder 4 für die Behandlung von Fasermaterialien, insbesondere von textilen Flächengebilden.
